# EUROPÄISCHE PATENTSCHRIFT

(11) **EP 3 874 248 B1**
(45) Veröffentlichungstag und Bekanntmachung des Hinweises auf die Patenterteilung: **08.03.2023**
(21) Anmeldenummer: 19794148.7
(22) Anmeldetag: 24.10.2019
(51) Int. Cl.: G01M 5/00, F03D 17/00, G01M 7/02, G01M 7/06

(54) **VERFAHREN UND PRÜFVORRICHTUNG ZUM PRÜFEN VON ROTORBLÄTTERN**
METHOD AND TESTING DEVICE FOR TESTING ROTOR BLADES
PROCÉDÉ ET DISPOSITIF D'ESSAI POUR SOUMETTRE À ESSAI DES PALES DE ROTOR

(30) Priorität: 29.10.2018 DE 102018218515
(43) Veröffentlichungstag der Anmeldung: 08.09.2021
(73) Patentinhaber: Fraunhofer-Gesellschaft zur Förderung der angewandten Forschung e.V., 80686 München (DE)
(72) Erfinder: BÄTGE, Moritz, 28203 Bremen (DE); ROSEMEIER, Malo, 28211 Bremen (DE); HALLER, Bernd, 26180 Rastede (DE); HA, Kwangtae, 28359 Bremen (DE); WROBLEWSKI, Willi, 28865 Lilienthal (DE); SAYER, Florian, 28213 Bremen (DE)
(74) Vertreter: Pfenning, Meinig & Partner mbB
(86) Internationale Anmeldenummer: PCT/EP2019/079073
(87) Internationale Veröffentlichungsnummer: WO 2020/089038

(56) Entgegenhaltungen:
- US-A1- 2006 037 402
- Nathan L Post: "Fatigue Test Design: Scenarios for Biaxial Fatigue Testing of a 60-Meter Wind Turbine Blade", Technical Report NREL/TP-5000-65227 July 2016, 31. Juli 2016 (2016-07-31), XP055656172, Gefunden im Internet: URL:https://www.researchgate.net/profile/N athan_Post/publication/306253195_Fatigue_T est_Design_Scenarios_for_Biaxial_Fatigue_T esting_of_a_60-Meter_Wind_Turbine_Blade/li nks/57b47c8b08aeaab2a1039299/Fatigue-Test- Design-Scenarios-for-Biaxial-Fatigue-Testi ng-of-a-60-Meter-Wind-Turbine-Blade.pdf [gefunden am 2020-01-09]

## Beschreibung

Die Erfindung betrifft ein Verfahren zum Prüfen von Rotorblättern sowie eine Prüfvorrichtung zum Prüfen von Rotorblättern.

Die Rotorblätter von Windenergieanlagen sind im Betrieb starken Belastungen und Verschleiß ausgesetzt. Eine große Herausforderung liegt darin, für Rotorblätter, die häufig über 30 m lang, manchmal auch noch sehr viel länger sind, größtmögliche Sicherheit auch unter extremen Bedingungen zu gewährleisten. Unfälle, die auf Ermüdung der Rotorblätter zurückzuführen sind, sollen nach Möglichkeit so gut wie vollständig ausgeschlossen werden.

Ermüdungstests sind zur Bestimmung der Leistungsfähigkeit der Rotorblätter unerlässlich. Dabei wird versucht, in Prüfständen möglichst realistische Belastungen für das Rotorblatt zu simulieren, also solche Belastungen die dann herrschen würden, wenn das Rotorblatt in der Windenergieanlage verbaut und im Betrieb wäre. Aufgrund der erwähnten Abmessungen der Rotorblätter ist das Prüfen mit erheblichem technischem, zeitlichem und finanziellem Aufwand verbunden.

Eine Möglichkeit, in Prüfverfahren realistische Belastungsbedingungen abzubilden, besteht darin, Subkomponenten von Windenergieanlagen zu testen, also beispielsweise Abschnitte von Rotorblättern mit Abmessungen von einigen Metern. Dabei werden mehrere solche Subkomponenten an unterschiedlichen Stellen des Rotorblatts entnommen und in Prüfständen vermessen. Daraus können Rückschlüsse auf die Leistungsfähigkeit des gesamten Rotorblatts gezogen werden.

Eine andere Möglichkeit, der auch die vorliegende Erfindung zuzurechnen ist, besteht darin, für ein komplettes Rotorblatt im Prüfstand realistische Bedingungen zu bewirken. Die Belastungen, die im Betrieb bestehen, sind typischerweise bekannt. Daraus ergeben sich Biegemomentverteilungen, die in den Prüfverfahren über eine bestimmte Zyklenzahl als Sollbiegemomentverteilungen zyklisch in die Rotorblätter eingeleitet werden sollen. Bei Verfahren gemäß dem Stand der Technik sind jedoch häufig große Abweichungen von der angestrebten Sollbiegemomentverteilung zu beobachten, da bisherige Verfahren keine exakte Einstellung der Biegemomentverteilung über die komplette Länge des Rotorblatts mit der gewünschten Genauigkeit erlauben. Aufgrund dieser Abweichungen ermüden einzelne Bereiche des Rotorblatts schneller als angestrebt und müssen repariert werden, um die Belastung in den anderen Bereichen fortsetzen zu können. Dementsprechend sind solche Verfahren gemäß dem Stand der Technik häufig ineffizient in Bezug auf die Prüfdauer und den Energieverbrauch.

Die Druckschrift "Fatigue Test Design: Scenarios for Biaxial Fatigue Testing of a 60-Meter Wind Turbine Blade" von Nathan L Post, Technical Report NREL/TP-5000-65227 July 2016, 31. Juli 2016, XP055656172 zeigt eine Studie zu einer biaxialen Ermüdungstestsimulation für ein fiktives 60 m-Windenergieanlagenrotorblatt. Zwei Prüfszenarien mit Verhältnissen von 1:1 und 1:2 zwischen einer Frequenz in Schlagrichtung und einer Frequenz in Schwenkrichtung werden offenbart.

Aufgabe der vorliegenden Erfindung ist es, eine effizientere Prüfung von Rotorblättern zu ermöglichen.

Die Aufgabe wird durch ein Verfahren gemäß dem unabhängigen Anspruch 1 sowie durch eine Prüfvorrichtung gemäß einem Nebenanspruch gelöst.

Vorteilhafte Ausführungen ergeben sich aus den Unteransprüchen sowie aus der Beschreibung und den Figuren.

Bei dem Verfahren wird eine Sollbiegemomentverteilung vorgegeben, mit der ein Rotorblatt einer Windenergieanlage belastet werden soll.

Das Rotorblatt wird in eine Einspannvorrichtung eines Prüfstands eingespannt, so dass sich eine Längsachse des Rotorblatts ausgehend von einer Einspannstelle des Rotorblatts erstreckt.

An dem Rotorblatt werden ein oder mehrere Lastrahmen befestigt. Es werden mindestens zwei aktive Lasteinleitungsmittel bereitgestellt, die jeweils an einem der Lastrahmen angreifen. Ein erstes der mindestens zwei aktiven Lasteinleitungsmittel wird dabei zur Lasteinleitung in eine Schwenkrichtung des Rotorblatts eingerichtet und ein zweites der mindestens zwei aktiven Lasteinleitungsmittel zur Lasteinleitung in eine Schlagrichtung des Rotorblatts.

Ferner wird mindestens ein passives Lasteinleitungsmittel bereitgestellt, das an einem der Lastrahmen angreift und auf das Rotorblatt wirkt. Mit dem mindestens einen passiven Lasteinleitungsmittel kann eine Systemeigenfrequenz eingestellt werden für ein System, welches das Rotorblatt und das mindestens eine passive Lasteinleitungsmittel umfasst. Es sei erwähnt, dass es auch möglich ist, dass der oder die Lastrahmen einen Einfluss auf die Systemeigenfrequenzen haben, so dass diese in solchen Fällen ebenfalls vom System umfasst sind und entsprechend bei der Bestimmung der Systemeigenfrequenz berücksichtig werden. Das heißt, es werden üblicherweise all diejenigen Komponenten berücksichtigt, die für das Schwingverhalten des Rotorblatts von Relevanz sind.

Mit dem mindestens einen passiven Lasteinleitungsmittel wird dabei die Systemeigenfrequenz in die Schwenkrichtung und/oder die Systemeigenfrequenz in die Schlagrichtung verändert.

Bei dem Verfahren erfolgt dann ein zyklisches Lasteinleiten mittels der mindestens zwei aktiven Lasteinleitungsmittel, wobei eine Lasteinleitungsfrequenz des ersten aktiven Lasteinleitungsmittels und eine Lasteinleitungsfrequenz des zweiten aktiven Lasteinleitungsmittels so gewählt werden, dass das Verhältnis der beiden Lasteinleitungsfrequenzen rational ist.

Die Lastrahmen und die mindestens zwei aktiven und das mindestens eine passive Lasteinleitungsmittel werden dabei an zuvor bestimmten Positionen angeordnet, die so gewählt sind, dass eine durch das zyklische Lasteinleiten eingeleitete Biegemomentverteilung die Sollbiegemomentverteilung nicht unterschreitet und nicht um mehr als 20 %, vorzugsweise nicht um mehr als 15 %, besonders bevorzugt nicht um mehr als 10 % übersteigt. In einer möglichen Ausführung des Verfahrens wird das Sollbiegemoment sogar nur um höchstens 5 % überschritten.

Durch dieses Verfahren wird es ermöglicht, die Testbedingungen für das Rotorblatt auf seiner gesamten Länge gezielt einzustellen. Durch die Veränderung der Systemeigenfrequenzen und die Anpassung der Lasteinleitungsfrequenzen aneinander nach den oben genannten Verhältnissen kann der Energieverbrauch im Prüfverfahren verringert und die Prüfdauer minimiert werden. Weiterhin kann durch die Anpassung der Lasteinleitungsfrequenzen eine besser kontrollierbare Bewegung bzw. Schwingung des Rotorblatts erreicht werden, bei der die Blattspitze eine Lissajous-Figur beschreibt. Insbesondere können dann die für jede Richtung absolvierten Zyklen besonders gut überwacht und gezählt werden.

Es kann durch das beschriebene Verfahren erreicht werden, dass das Rotorblatt über seine gesamte Länge ausreichend und gleichmäßig belastet wird, so dass es nicht zu einem frühzeitigen Bruch oder einer frühzeitigen vollständigen Ermüdung einzelner Abschnitte kommt, die dann repariert werden müssten, um die Prüfung der verbleibenden Abschnitte fortsetzen zu können.

Es wird, wie erwähnt, ein rationales Verhältnis zwischen den Lasteinleitungsfrequenzen eingestellt. Das heißt, das Verhältnis ist gegeben durch n₁:n₂, wobei n₁ und n₂ natürliche Zahlen sind. Es kann vorgesehen sein, dass n₁ und n₂ jeweils nicht größer als beispielsweise 5 sind, um zu komplexe Bewegungen des Rotorblatts zu vermeiden. Alternativ oder zusätzlich kann n₁ und/oder n₂ gleich 1 sein, während das rationale Verhältnis zwischen n₁ und n₂ beibehalten wird. In bevorzugten Ausführungen beträgt das Verhältnis 1:2, 2:1 oder 1:1. In besonders bevorzugten Ausführungen beträgt das Verhältnis 1:1. Das letztgenannte Verhältnis hat den Vorteil, dass die maximale Belastung in die Schwenkrichtung nicht mit einer starken Belastung in die Schlagrichtung überlagert wird und anders herum.

Zur Einstellung des gewünschten Frequenzverhältnisses kann vorgesehen sein, dass die Lasteinleitungsfrequenzen gesteuert und/oder geregelt werden. Es kann eine Überwachung der Bewegung des Rotorblatts oder der Rotorblattspitze stattfinden und eine Anpassung der durch die aktiven Lasteinleitungsmittel eingeleiteten Bewegung stattfinden, so dass während des Prüfens stets die geschlossenen Lissajous-Figuren entstehen.

Wie erwähnt, erfolgt bei dem Verfahren durch das mindestens eine passive Lasteinleitungsmittel eine Modifikation der Systemeigenfrequenz für die Schwenkrichtung und/oder für die Schlagrichtung.

Das mindestens eine passive Lasteinleitungsmittel kann dabei so angeordnet werden, dass die Systemeigenfrequenz in die Schlagrichtung mit der Lasteinleitungsfrequenz in die Schlagrichtung übereinstimmt. Es ist aber auch möglich, dass die Systemeigenfrequenz in die Schlagrichtung zum Einbringen einer zusätzlichen Belastung so modifiziert wird, dass sie nicht mehr als 10 % von der Systemeigenfrequenz in die Schlagrichtung abweicht.

Alternativ oder zusätzlich kann das mindestens eine passive Lasteinleitungsmittel so angeordnet wird, dass die Systemeigenfrequenz in die Schwenkrichtung mit der Lasteinleitungsfrequenz in die Schwenkrichtung in Übereinstimmung gebracht wird oder so, dass die Systemeigenfrequenz in die Schwenkrichtung zum Einbringen einer zusätzlichen Belastung nicht mehr als 10 % von der Systemeigenfrequenz in die Schwenkrichtung abweicht.

In möglichen Ausführungen wird also die Lasteinleitungsfrequenz in die Schlagrichtung und/oder in die Schwenkrichtung mit der Systemeigenfrequenz in die jeweilige Richtung identisch gewählt, was energetisch Vorteile bringen kann. In alternativen Ausführungen kann die Lasteinleitungsfrequenz in die Schlagrichtung und/oder in die Schwenkrichtung wie oben beschrieben abweichend von der jeweiligen Systemeigenfrequenz gewählt werden, um gezielt eine zusätzliche Belastung einzubringen. Das heißt, durch eine derartige Frequenzverstimmung kann das jeweilige verstimmte aktive Lasteinleitungsmittel ähnlich wie eine Feder oder eine Masse wirken, die an dem Rotorblatt befestigt ist. Die Abweichung von der Systemeigenfrequenz beträgt dabei in typischen derartigen Ausführungen beispielsweise weniger als 10 % oder weniger als 5 %. In manchen derartigen Ausführungen kann die Abweichung zum Erreichen einer zusätzlichen Belastung von der Systemeigenfrequenz sogar weniger als 2% oder 1 % betragen.

In bevorzugten Ausführungen weicht die Systemeigenfrequenz weder in der Schlagrichtung noch in der Schwenkrichtung mehr als 10 %, insbesondere weniger als 5 %, von der jeweiligen Lasteinleitungsfrequenz ab.

Das mindestens eine passive Lasteinleitungsmittel ist in manchen Ausführungen so ausgestaltet, dass es nur oder im Wesentlichen nur in eine Richtung wirkt. Das heißt, es kann dann dazu dienen, die Systemeigenfrequenz in die Schlagrichtung zu modifizieren während die Systemeigenfrequenz in die Schwenkrichtung unverändert oder fast unverändert bleibt, oder anders herum. Wenn mehr als ein passives Lasteinleitungsmittel vorhanden ist, ist typischerweise zumindest eines der mehreren passiven Lasteinleitungsmittel so ausgebildet, dass es nur oder im Wesentlichen nur in eine Richtung wirkt.

Das mindestens eine passive Lasteinleitungsmittel kann beispielsweise mindestens ein passives Lasteinleitungsmittel zum Einstellen der Systemeigenfrequenz in die Schlagrichtung und/oder mindestens ein passives Lasteinleitungsmittel zum Einstellen der Systemeigenfrequenz in die Schwenkrichtung umfassen.

Bei dem Verfahren können die Positionen der Lastrahmen und der aktiven und passiven Lasteinleitungsmittel in einem Optimierungsprozess bestimmt werden.

Dabei können verschieden Konstanten oder Randbedingungen vorgegeben sein sowie verschiedene Zielgrößen, die zu erreichen oder zu optimieren sind. Designvariablen können dann so angepasst werden, dass die Zielgrößen möglichst gut erreicht werden.

Beispielsweise können zu den Konstanten typischerweise das Frequenzverhältnis zwischen Schlag- und Schwenkrichtung zählen. Dabei kann entweder vorgegeben sein, dass das Verhältnis zwischen Schlag- und Schwenkrichtung wie oben erwähnt rational sein soll, oder es kann ein explizites Verhältnis, wie etwa 1:1 oder 1:2 angegeben sein, das erreicht werden soll, das heißt die Lissajous-Figur hat die Form einer Ellipse oder einer Acht. Der Phasenwinkel zwischen der Anregung in die Schlagrichtung und der Anregung in die Schwenkrichtung kann im Falle einer Ellipse als Lissajous-Figur beispielsweise zwischen 0° und 180°, vorzugsweise zwischen 45° und 135°, besonders bevorzugt 90° betragen. Insbesondere kann die Ellipse als Kreis ausgebildet sein.Wenn die Lissajous-Figur die Form einer Acht einnimmt, kann der Phasenwinkel zwischen den Anregungen beispielsweise 0° oder 180° betragen.

Eine weitere Konstante können beispielsweise Montagebereiche sein, in denen die Lastrahmen angeordnet werden können. Etwa können Mindestabstände zu der Einspannstelle oder zur Blattspitze oder zwischen den Lastrahmen oder zu design-kritischen Bereichen vorgegeben sein.

Weitere Konstanten können beispielsweise eine maximal mögliche Auslenkung der aktiven Lasteinleitungsmittel oder eine maximale Kraft der aktiven Lasteinleitungsmittel sein.

Als Zielgröße kann einerseits die Sollbiegemomentverteilung vorgegeben sein, die es mindestens und möglichst genau zu erreichen gilt. Das heißt, als Vorgabe kann beispielsweise angegeben werden, dass das durch die Lasteinleitung in die Schlag- und in die Schwenkrichtung an jedem Ort eingeleitete Biegemoment nicht mehr als die oben erwähnten 20 % oder 15 % oder 10 % oder 5 % über der Sollbiegemomentverteilung liegt und diese nicht unterschreitet. Die Sollbiegemomentverteilung kann gegenüber anderen Zielgrößen priorisiert werden.

Zur Einstellung der Sollbiegemomentenverteilung kann wie erwähnt das durch die Schwerkraft verursachte Mittelbiegemoment insbesondere durch die passiven Lasteinleitungsmittel kompensiert werden. Darüber hinaus ist es aber auch möglich, ein Sollmittelbiegemoment zu ermitteln und einzustellen, das Bedingungen entspricht, die im Feld typisch sind. Das heißt, es kann eine Verteilung im Feld auftretender Momentenvektorpfade ermittelt werden. Das geschieht beispielsweise mittels einer aeroservoelastischen Mehrkörpersimulation. Daraus ergibt sich eine Wahrscheinlichkeitswolke, innerhalb der die im Feld auftretenden Momentenvektorpfade liegen. Das durch die passiven Lasteinleitungsmittel, vorzugsweise durch die entkoppelten Massen und/oder durch entsprechend vorgespannte elastische Elemente hervorgerufene Mittelbiegemoment wird dann so eingestellt, dass ein Mittelpunkt der von den aktiven Lasteinleitungsmitteln erzeugten Momentenvektorpfade innerhalb der Verteilung der im Feld auftretenden Momentenvektorpfade liegt.

Die im Versuch erzeugten Momentenvektorpfade können dabei nicht nur an die Position der im Feld auftretenden Momentenvektorpfade angenähert werden, die Momentenvektorpfade können auch noch an eine Kontur der Wahrscheinlichkeitswolke angepasst werden.

Für diese Anpassung können beispielsweise die folgenden zwei Vorgehensweisen, jeweils für sich genommen oder in Kombination, vorgesehen sein: Erstens kann das Rotorblatt im oder gegen den Uhrzeigersinn um seine Längsachse angestellt (gepitcht) werden. Zweitens kann ein Phasenwinkels zwischen der Lasteinleitung in die Schwenkrichtung und der Lasteinleitung in die Schlagrichtung eingestellt werden.

Weitere Zielgrößen können beispielsweise der Energieverbrauch oder die Prüfdauer sein, die jeweils minimiert werden können.

Designvariablen, die im Verfahren zur Verfügung stehen, um die Zielgrößen möglichst gut zu erreichen, umfassen dabei beispielsweise:
- die Anzahl der Lastrahmen,
- die Position der Lastrahmen,
- Ausgestaltung und Wirkrichtung jedes des einen oder der mehreren eingesetzten passiven Lasteinleitungsmittel,
- die Lasteinleitungsfrequenzen der aktiven Lasteinleitungsmittel.

Aus dem Optimierungsprozess folgt dann beispielsweise ein konkreter Prüfstandaufbau bzw. eine bestimmte Prüfdurchführung mit den im Optimierungsprozess bestimmten Frequenzen und der im Optimierungsprozess bestimmten Anzahl von Zyklen. Mit dem Verfahren kann erreicht werden, dass möglichst wenige Lastrahmen benötigt werden und die Abschnitte des Rotorblatts, die unter Belastung stehen möglichst lang sind.

Die Längsachse des Rotorblatts erstreckt sich bei dem Verfahren üblicherweise im Wesentlichen horizontal. Die Schwenkrichtung kann dabei beispielsweise horizontal ausgerichtet werden. Die Schlagrichtung ist dann im Wesentlichen die vertikale Richtung, wobei es aufgrund des elastischen Verhaltens des Rotorblatts bzw. aufgrund einer Durchbiegung des Rotorblatts auch horizontale Anteile geben kann.

Es sei erwähnt, dass der Einfluss der Schwerkraft, der insbesondere bei horizontal eingespannten Rotorblättern einen relevanten Beitrag zum eingeleiteten Biegemoment liefert, bei der Wahl der aktiven und passiven Lasteinleitungsmittel üblicherweise berücksichtigt wird. Die auf das Blatt wirkende Gewichtskraft bewirkt ein Mittelbiegemoment, wodurch bei einem ansonsten unpräparierten Rotorblatt beispielsweise dann, wenn das Blatt nach unten maximal ausgelenkt ist, an einer oder beiden Seiten des Blatts eine zu hohe Last und bei entgegengesetzter Auslenkung eine zu niedrige Last eingeleitet wird. Mit dem vorgestellten Verfahren bzw. Prüfstand, kann das Mittelbiegemoment, bspw. durch entsprechend ausgestaltete passive Lasteinleitungsmittel modifiziert werden und die erwähnte zu hohe oder zu niedrige Last kann ausgeglichen werden. Zu diesem Zweck eingerichtete Lasteinleitungsmittel werden später in dieser Anmeldung noch ausführlich beschrieben.

Die mindestens zwei aktiven Lasteinleitungsmittel können extern verankert sein. Sie können also beispielsweise an einem Boden oder einer Wand verankert sein. Alternativ oder zusätzlich können einer oder mehrere der mindestens zwei aktiven Lasteinleitungsmittel auch als Massenanreger ohne externe Verankerung ausgebildet sein, die eine an einem Aktuator befestigte Masse in Schwingung oder Rotation versetzen.

In einer vorteilhaften Ausführung ist das mindestens eine passive Lasteinleitungsmittel oder zumindest eines des mindestens einen passiven Lasteinleitungsmittels extern verankert. Es kann beispielsweise als am Boden oder an der Wand verankertes elastisches Element ausgebildet sein. Es kann auch als entkoppelte Masse ausgebildet sein, die beispielsweise auf einer Wippe gelagert ist, die ihrerseits beispielsweise auf dem Boden oder an einer Wand befestigt ist. Derartige passive Lasteinleitungsmittel haben den Vorteil, dass sie so ausgebildet werden können, dass sie nur in eine Richtung, also beispielsweise nur in die Schwenkrichtung oder nur in die Schlagrichtung wirken. Alternativ oder zusätzlich können aber auch fixierte Massen, die mit dem Rotorblatt mitschwingen als passive Lasteinleitungsmittel vorgesehen sein.

Wie erwähnt, ist das mindestens eine passive Lasteinleitungsmittel typischerweise ausgewählt ist aus fixierten Massen, entkoppelten Massen und elastischen Elementen. In möglichen Ausführungen des Verfahrens kann es sein, dass zumindest eines des zumindest einen passiven Lasteinleitungsmittels als entkoppelte Masse oder als elastisches Element gewählt wird.

Die Lasteinleitungsfrequenz des ersten Lasteinleitungsmittels kann in Ausführungen des Verfahrens darauf beschränkt sein, identisch zu der Lasteinleitungsfrequenz des zweiten Lasteinleitungsmittels zu sein oder doppelt so groß wie die Lasteinleitungsfrequenz des zweiten Lasteinleitungsmittels zu sein. Durch diese Auswahl können Belastung und Prüfdauer für viele Anwendungen optimiert werden.

Es kann als Mindestabstand zwischen zwei benachbarten Lastrahmen ein Abstand von 1m gewählt werden. Dadurch kann verhindert werden, dass die Lastrahmen zu nah aneinander liegen und dadurch zwischen den Lastrahmen liegende Bereich nicht ausreichend belastet werden können. Ein maximaler Abstand zwischen zwei benachbarten Lastrahmen hängt typischerweise von der Länge des zu prüfenden Blatts ab.

In manchen Ausführungen kann die Anzahl Lastrahmen zum Beispiel auf maximal zehn oder auf maximal sechs oder auf maximal drei beschränkt werden. In einer möglichen Ausführung werden genau zwei Lastrahmen verwendet.

Eine Prüfvorrichtung zum Prüfen eines Rotorblatts, mit der das hier beschriebene Verfahren durchgeführt werden kann, kann beispielsweise umfassen:
- eine Einspannvorrichtung zum Einspannen des Rotorblatts an einer Einspannstelle des Rotorblatts, so dass sich die Längsachse des Rotorblatts von der Einspannstelle ausgehend im Wesentlichen horizontal erstreckt,
- mindestens einen Lastrahmen zur Befestigung an dem Rotorblatt,
- mindestens zwei aktive Lasteinleitungsmittel, die jeweils an einem der Lastrahmen befestigt sind,
   mindestens ein passives Lasteinleitungsmittel, von denen jedes an jeweils einem der Lastrahmen befestigt ist.

Dabei kann mindestens eines der mindestens zwei aktiven Lasteinleitungsmittel zur Lasteinleitung in die Schwenkrichtung in das Rotorblatt eingerichtet sein. Weiterhin kann mindestens eines der mindestens zwei aktiven Lasteinleitungsmittel zur Lasteinleitung in eine Schlagrichtung in das Rotorblatt eingerichtet sein.

Das mindestens eine passive Lasteinleitungsmittel kann extern verankert sein und ein elastisches Element und/oder eine entkoppelte Masse umfassen und dafür eingerichtet sein, eine Systemeigenfrequenz in die Schwenkrichtung und/oder in die Schlagrichtung einzustellen, für ein System, welches das Rotorblatt und das mindestens eine passive Lasteinleitungsmittel umfasst.

Durch diese Ausgestaltung kann die Systemeigenfrequenz in die Schlagrichtung und/oder in die Schwenkrichtung besonders flexibel angepasst werden, so dass die Zielgrößen besonders gut erreicht oder optimiert werden können. Durch das derartig ausgebildete mindestens eine passive Lasteinleitungsmittel kann insbesondere ein getrennte Einstellung der beiden Systemeigenfrequenzen ermöglicht werden.

Die aktiven Lasteinleitungsmittel können beispielsweise als hydraulischer, oder pneumatischer oder elektrischer Aktuator ausgebildet sein. In bevorzugten Ausführungen ist zumindest eines der aktiven Lasteinleitungsmittel extern verankert. Insbesondere können auch alle aktiven Lasteinleitungsmittel extern verankert sein. Alternativ oder zusätzlich können als aktive Lasteinleitungsmittel für Schlag- und/oder Schwenkrichtung aber auch Massenerreger verwendet werden, die nicht extern verankert sind.

Das elastische Element kann beispielsweise als Feder oder als Torsionsfeder oder als Balken oder als Blattfeder ausgebildet sein. Das elastische Element kann extern verankert sein, beispielsweise am Boden oder an der Wand.

Das elastische Element kann einen Faserverbundwerkstoff umfassen, der beispielsweise Glasfasern und/oder Kohlefasern beinhaltet.

Es sei betont, dass Merkmale, die hier nur in Bezug auf das Verfahren erwähnt sind, auch für den vorgeschlagenen Prüfstand beansprucht werden können und anders herum.

Nachfolgend wird die Erfindung beispielhaft anhand von Figuren näher erläutert.

Es zeigen:
- Fig. 1: Eine Prüfvorrichtung in einem Aufbaustadium, mit eingespanntem Rotorblatt mit einem aktiven und einem passiven Lasteinleitungsmittel,
- Fig. 2: Die Prüfvorrichtung in einem Aufbaustadium, mit eingespanntem Rotorblatt mit einem aktiven und zwei passiven Lasteinleitungsmitteln,
- Fig. 3: Die Prüfvorrichtung in einem Aufbaustadium, mit eingespanntem Rotorblatt mit einem aktiven und zwei passiven Lasteinleitungsmitteln, jeweils für die Schlagrichtung,
- Fig. 4: Die Prüfvorrichtung mit eingespanntem Rotorblatt mit aktiven und passiven Lasteinleitungsmitteln, jeweils für die Schlagrichtung und die Schwenkrichtung,
- Fig. 5-11: Passive Lasteinleitungsmittel für die Schlagrichtung, jeweils ein elastisches Element umfassend,
- Fig. 12: Ein passives Lasteinleitungsmittel für die Schlagrichtung, eine entkoppelte Masse umfassend,
- Fig. 13: Ein passives Lasteinleitungsmittel für die Schwenkrichtung, ein elastisches Element umfassend,
- Fig. 14: Ein aktives Lasteinleitungsmittel für die Schwenkrichtung,
- Fig. 15: Ein passives Lasteinleitungsmittel für die Schwenkrichtung, eine entkoppelte Masse umfassend,
- Fig. 16: Ein passives Lasteinleitungsmittel für die Schwenkrichtung und ein passives Lasteinleitungsmittel für die Schlagrichtung, die beide an einem einzigen Lastrahmen angeordnet sind,
- Fig. 17: Ein passives Lasteinleitungsmittel für die Schwenkrichtung, zwei entkoppelte Massen umfassend,
- Fig. 18: Ein asymmetrisch wirkendes passives Lasteinleitungsmittel für die Schlagrichtung, zwei entkoppelte Massen umfassend,
- Fig. 19: Ein Flussdiagramm für einen Optimierungsprozess für ein Verfahren zum Prüfen eines Rotorblatts,
- Fig. 20: Biegemomentvektoren für einen Querschnitt des Rotorblattes, und
- Fig. 21: Ein passives Lasteinleitungsmittel für die Schwenkrichtung eines angestellten Blattes, eine entkoppelte Masse umfassend.

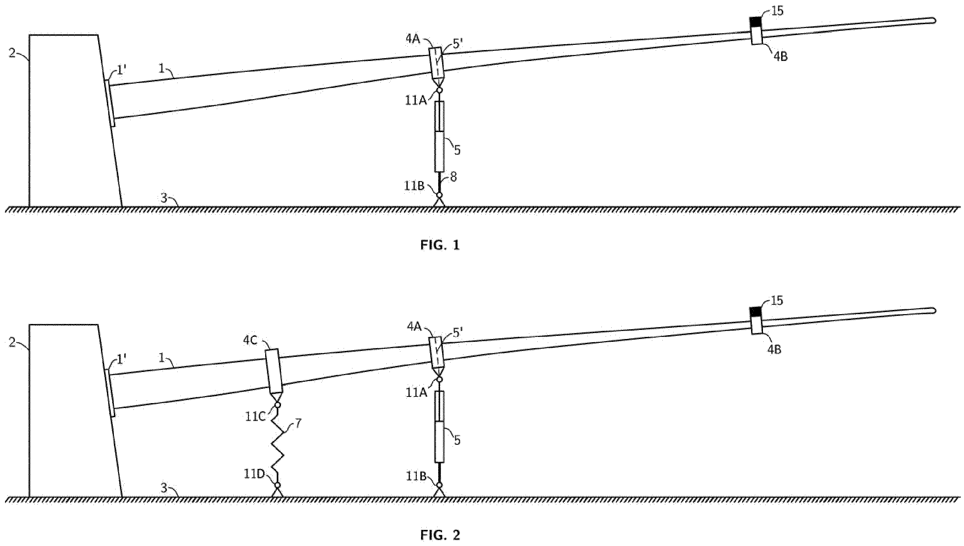

Figur 1 zeigt eine Prüfvorrichtung zum Prüfen eines Rotorblatts 1 einer Windenergieanlage. Die Prüfvorrichtung befindet sich dabei in einem Aufbaustadium, in dem nach und nach mehrere in Längsrichtung voneinander beabstandete Lastrahmen und daran angreifende Lasteinleitungsmittel an zuvor bestimmten Positionen an einem Rotorblatt angeordnet werden. Die Prüfvorrichtung umfasst eine Einspannvorrichtung 2, in die das komplette Rotorblatt 1 an einer Einspannstelle 1' eingespannt ist, so dass sich seine Längsachse ungefähr horizontal erstreckt, während eine Schwenkrichtung sich horizontal, orthogonal zur Zeichenebene erstreckt. Eine Schlagrichtung verläuft dementsprechend in etwa vertikal.

An dem Rotorblatt ist ein aktives Lasteinleitungsmittel 5 angeordnet, das als hydraulischer, pneumatischer oder elektrischer Aktuator ausgebildet ist. Der Aktuator ist mittels Gelenken 11A, 11B mit einem an dem Rotorblatt befestigten Lastrahmen 4A und über eine zusätzliche Stange auch mit einem Boden 3 verbunden. Der Aktuator wirkt als aktives Lasteinleitungsmittel in die Schlagrichtung des Rotorblatts, also im Wesentlichen vertikal, wobei zumindest dann, wenn das Rotorblatt in Schwingungen versetzt wird, der Aktuator dank der Gelenke 11A, 11B von der Vertikalen abweichen kann und weiterhin Last in das Rotorblatt einleiten kann.

Ein weiterer Lastrahmen 4B ist weiter außen an dem Rotorblatt 1 angeordnet und hält als passives Lasteinleitungsmittel eine fixierte Masse 15, durch die das Schwingverhalten des Rotorblatts 1 beeinflusst wird. Durch die fixierte Masse 15 wird einerseits das auf das Rotorblatt wirkende Biegemoment verändert und andererseits werden die Eigenfrequenzen des schwingenden Rotorblatts 1 modifiziert. Das heißt, eine Systemeigenfrequenz für ein System, welches das Rotorblatt 1 und das passive Lasteinleitungsmittel umfasst, ist aufgrund des als fixierte Masse 15 ausgebildeten passiven Lasteinleitungsmittel in die Schwenkrichtung und in die Schlagrichtung gegenüber der Eigenfrequenz des Rotorblatts 1 modifiziert. Der Aktuator kann so betrieben werden, dass seine Lasteinleitungsfrequenz mit der Systemeigenfrequenz in die Schlagrichtung, in die der Aktuator wirkt, übereinstimmt. Er kann aber auch mit einer Verstimmung von beispielsweise weniger als 1 % gegenüber der Systemeigenfrequenz betrieben werden, um als sogenannte Aktuator-Masse oder Aktuator-Feder zu wirken und eine zusätzliche Last in das Rotorblatt einzubringen.

Der in der Figur 1 gezeigte Aufbau stellt einen möglichen Ausgangsaufbau für die hier vorgeschlagene Prüfvorrichtung dar, der bei typischen Verfahren gemäß dieser Anmeldung noch um zusätzliche Elemente erweitert wird. Dabei wird die Position der Lastrahmen 4 und die Ausgestaltung und Anordnung der aktiven und passiven Lasteinleitungsmittel so gewählt, dass eine vorgegebene Sollbiegemomentverteilung möglichst gut erreicht wird.

In Figur 2 ist neben den Elementen aus Figur 1 noch zusätzlich ein zweites passives Lasteinleitungsmittel gezeigt, das als Feder 7 ausgebildet ist und ebenfalls in die Schlagrichtung wirkt. Die Feder 7 ist mittels Gelenken 11C, 11D beweglich am Rotorblatt 1 und am Boden 3 befestigt. Es sitzt zwischen dem aktiven Lasteinleitungsmittel 5 und der Einspannstelle 1' und verändert in diesem Bereich die Biegemomentverteilung. Durch die Feder 7 wird die Systemeigenfrequenz für die Schlagrichtung weiter verändert, die Systemeigenfrequenz für die Schwenkrichtung jedoch nicht oder kaum beeinflusst. Lediglich bei sehr großen Auslenkungen in die Schwenkrichtung kann es zu einer Beeinflussung einer Bewegung in die Schwenkrichtung durch die gezeigte Feder 7. Eine solche Feder eignet sich also zur Anpassung der Systemeigenfrequenz für nur eine ausgewählte Richtung.

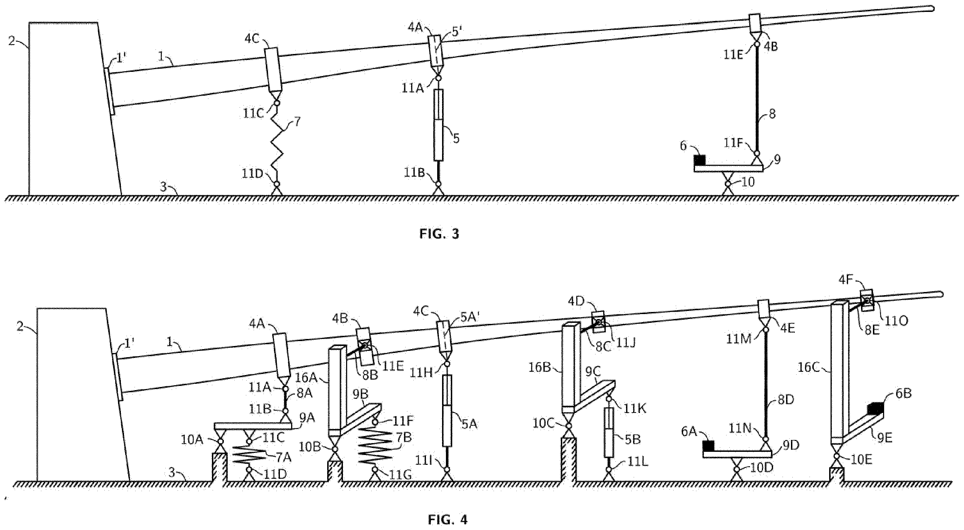

Es kann beispielsweise sein, dass durch die in Figur 2 gezeigte Ausführung eine angestrebte Biegemomentverteilung in die Schlagrichtung mit einer Abweichung von beispielsweise weniger als 10% erreicht ist, so dass die Konfiguration für die Schlagrichtung abgeschlossen ist und nun die Konfiguration für die Schwenkrichtung vorgenommen werden kann, wobei durch die Ausgestaltung der aktiven und passiven Lasteinleitungsmittel für die Schwenkrichtung gewährleistet werden kann, dass die Parameter für die Schlagrichtung nicht mehr oder nur noch unwesentlich verändert werden (siehe hierzu auch die nachfolgenden Figuren 3 bis 18). Das kann beispielsweise bewirkt werden, indem eventuell hinzukommende Lastrahmen möglichst leicht ausgebildet werden. Alternativ kann es sein, dass der Einfluss der hinzukommenden Lastrahmen und der weiteren passiven Lasteinleitungsmittel für die Schwenkrichtung bei der Positionierung und Auswahl der in der Figur 2 gezeigten Lasteinleitungsmittel bereits berücksichtigt wurde.

Figur 3 zeigt einen ähnlichen Aufbau wie die Figur 2, wobei im Unterschied zur Figur 2 an dem zweiten Lastrahmen 4B anstelle der fixierten Masse 15 eine entkoppelte Masse 6 angreift. Die entkoppelte Masse 6 ist an einem Ende eines Hebelarms 9 angeordnet, der auf einem Scharnier 10 als Wippe gelagert ist. An einem der entkoppelten Masse 6 abgewandten Ende des Hebelarms ist der Hebelarm mittels einer Stange 8 und mittels Gelenken 11E, 11F mit dem zweiten Lastrahmen 4B verbunden. Durch das Gewicht der entkoppelten Masse 6 wird also aufgrund der Wippe ein Druck von unten auf das Rotorblatt 1 ausgewirkt. Die entkoppelte Masse 6 beeinflusst wieder das wirkende Biegemoment und kann eingesetzt werden, um die Biegemomentverteilung an die Sollbiegemomentverteilung anzupassen. Dabei kann bei der gezeigten Konfiguration erreicht werden, dass das Biegemoment nur in die Schlagrichtung, nicht aber in die Schwenkrichtung verändert wird. Gleiches gilt für die mit dem Anbringen der entkoppelten Masse 6 einhergehende Modifikation der Systemeigenfrequenzen: Die Systemeigenfrequenz verändert sich im Wesentlichen nur in die Schlagrichtung und nicht in die Schwenkrichtung.

Figur 4 zeigt eine Prüfvorrichtung, bei der das Rotorblatt wie in den Figuren 1 bis 3 eingespannt ist. Bei dieser Prüfvorrichtung sind sechs Lastrahmen 4A-4F vorhanden, an die jeweils aktive oder passive Lasteinleitungsmittel gekoppelt sind. Ein Abstand zwischen benachbarten Lastrahmen beträgt dabei immer mindestens 1 m.

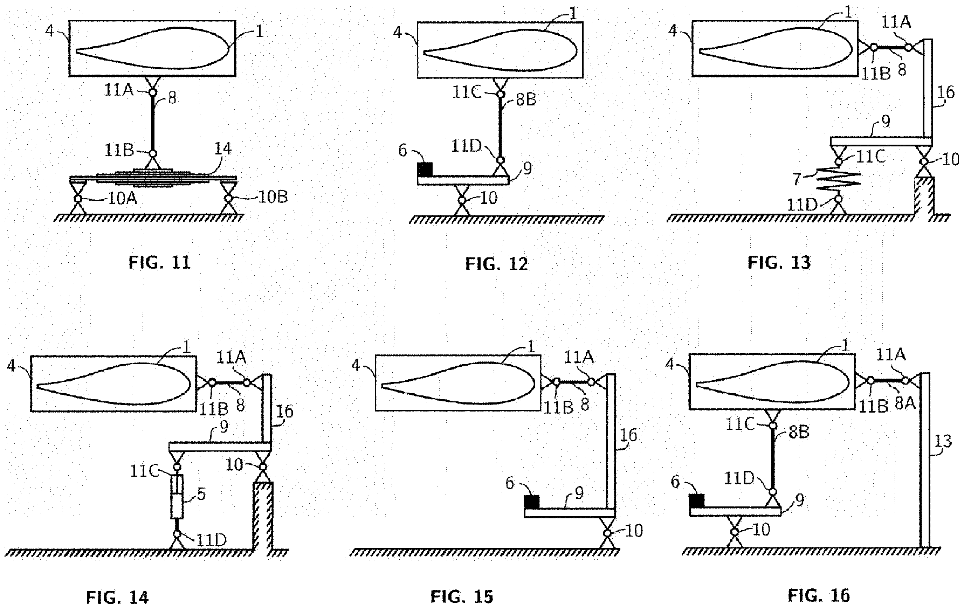

In der Figur 4 sind dabei auch Lasteinleitungsmittel gezeigt, die so ausgestaltet sind, dass sie in die Schwenkrichtung, nicht aber in die Schlagrichtung wirken, wie nachfolgend erläutert wird. Es ist zu erwähnen, dass in der Figur zwar für jedes Lasteinleitungsmittel ein eigener Lastrahmen gezeigt ist, jedoch auch mehrere Lasteinleitungsmittel an einem einzigen Lastrahmen angreifen können. Insbesondere kann an einem oder an mehreren der Lastrahmen jeweils ein Lasteinleitungsmittel, das in die Schlagrichtung wirkt, und ein Lasteinleitungsmittel, das in die Schwenkrichtung wirkt, angeordnet sein (siehe auch Figur 16. Mindestens zwei Lastrahmen werden jedoch typischerweise mindestens benötigt, um die im Verfahren mindestens angedachte Anzahl Lasteinleitungsmittel befestigen zu können und um die Sollbiegemomentverteilung gut zu erreichen.

An einem am nächsten an der Einspannstelle 1' angeordneten ersten Lastrahmen 4A ist ein als Feder 7A ausgebildetes elastisches Element als passives Lasteinleitungsmittel so konfiguriert, dass es in die Schlagrichtung des Rotorblatts 1 wirkt. Die Feder wirkt über einen um ein Scharnier 10A schwenkbaren Hebelarm 9A und eine mit dem Hebelarm verbundene vertikale Stange 8A auf den Lastrahmen 4A und wirkt sich auf die Biegemomentverteilung in die Schlagrichtung aus.

An einem zweiten Lastrahmen 4B ist eine ähnliche Vorrichtung wie im Fall des ersten Lastrahmens 4A angeordnet, bei der eine Feder 7B als passives Lasteinleitungsmittel wirkt. Die Feder 7B wirkt auf ein Ende eines Hebelarms 9B. Am anderen Ende des Hebelarms 9B sitzt dieser auf einem Scharnier 10B. Oberhalb des Scharniers 10B ist zusätzlich ein Winkelbalken 16A vorgesehen, der sich im rechten Winkel zu dem Hebelarm 9B nach oben erstreckt. Der Winkelbalken ist wiederum über eine horizontal verlaufende Stange 8B mit dem Lastrahmen 4B verbunden. Das heißt, die passive Last der Feder 7B wird durch die Vorrichtung so umgelenkt, dass die Biegemomentverteilung in der Nähe des zweiten Lastrahmens 4B in die Schwenkrichtung modifiziert wird. Ausgestaltungen, bei denen ein auf einem Gelenk beweglich gelagerter Hebelarm mit Winkelbalken und Stange ausgestattet wird, eignen sich zum Umlenken der wirkenden Kräfte in die Horizontale, also bei der vorliegenden Konfiguration in die Schwenkrichtung des Rotorblatts 1. Auch im Zusammenhang mit anderen Lasteinleitungsmitteln, etwa aktiven Lasteinleitungsmitteln oder entkoppelten Massen kann eine derartige Vorrichtung verwendet werden, wie nachfolgend noch beschrieben wird.

An einem dritten Lastrahmen 4C ist ein Aktuator 5A als aktives Lasteinleitungsmittel angeordnet, der wie in den Figuren 1 bis 3 ausgestaltet ist und dementsprechend in die Schlagrichtung wirkt.

An einem vierten Lastrahmen 4D ist ein weiterer Aktuator 5B angeordnet, der in die Schwenkrichtung wirkt. Das wird analog zum Fall des Lastrahmens 4B erreicht, indem der weitere Aktuator 5B mit einem auf einem Scharnier 10C beweglich gelagerten Hebelarm 9C verbunden wird. Der Hebelarm wird über einen nach oben gerichteten Winkelbalken 16B und eine horizontale Stange 8C mit dem vierten Lastrahmen 4D verbunden und die durch den weiteren Aktuator 5B eingeleitete Kraft so in die Schwenkrichtung umgeleitet.

Weiter in Richtung der Spitze des Rotorblatt 1 sind noch zwei weitere Lastrahmen 4E, 4F angeordnet, die jeweils mit einer entkoppelte Masse 6A, 6B verbunden sind. Die am Lastrahmen 4E wirkende entkoppelte Masse wirkt genau wie im Fall der Figur 3 in die Schlagrichtung. Die mit dem Lastrahmen 4F verbundene entkoppelte Masse 6B wirkt in die Schwenkrichtung, indem, wieder analog zum Fall der Lastrahmen 4B oder 4D, ein Hebelarm, auf dem sie platziert ist, auf einer der Masse 6B gegenüberliegenden Seite mit einem Winkelbalken 16C und einer Stange 8E ausgestattet wird.

Im vorliegenden Fall sind die elastischen Elemente am nächsten an der Einspannstelle angeordnet, gefolgt von aktiven Lasteinleitungsmitteln und schließlich den am weitesten außen sitzenden entkoppelten Massen. Diese Konfiguration kann zum Herstellen von rotorblatttypischen Biegemomentverteilungen vorteilhaft sein.

Durch die bereitgestellten passiven Lasteinleitungsmittel werden einerseits die Biegemomentverteilungen in die Schwenk- und in die Schlagrichtung an die Sollbiegemomentverteilung in die jeweilige Richtung so angepasst, dass die Biegemomentverteilung während des Prüfens nicht mehr als 10 % oder nicht mehr als 5 % über der Sollbiegemomentverteilung liegt und diese gleichzeitig nicht unterschreitet. Andererseits werden die Systemeigenfrequenzen für das Rotorblatt 1 mit den daran angeordneten Lasteinleitungsmitteln verändert.

Die Wirkrichtung der Stangen 8B, 8C, 8E für die passiven und aktiven Lasteinleitungsmittel in Schwenkrichtung wird so gewählt, dass sie im Ruhezustand mit der Schwenkbewegungsrichtung an der Lasteinleitungsstelle koinzidiert. Die Lasteinleitungsmittel können dann entkoppelt vom Schlagmoment wirken. Genau umgekehrt verhält es sich für die Stangen 8A, 8D der Lasteinleitungsmittel für die Schlagrichtung. Konkret kann das bedeuten, dass an den unterschiedlichen Abschnitten, an denen die Lastrahmen sitzen, die Schwenk- und Schlagmoden und ihre jeweiligen Bewegungsrichtungen für das System mit den daran angeordneten passiven Lasteinleitungsmitteln bestimmt werden und die Stangen anhand der ermittelten Bewegungsrichtungen wie beschrieben angeordnet werden. Während des Prüfversuchs werden die Stangen dann gleichermaßen in beide Richtungen aus dem Ruhezustand ausgelenkt.

Wenn der in der Figur 4 beschriebene Aufbau nun zum Prüfen des Rotorblatts 1 verwendet wird, werden mittels der aktiven Lasteinleitungsmittel 5A, 5B zyklische Lasten in die horizontale und in die vertikale Richtung in das Rotorblatt eingeleitet. Die Lasteinleitungsfrequenz des horizontal bzw. in die Schlagrichtung wirkenden Lasteinleitungsmittels 5B ist dabei entweder identisch zu der Lasteinleitungsfrequenz des Lasteinleitungsmittels 5A, das in die vertikale Richtung bzw. die Schlagrichtung wirkt, oder das Verhältnis zwischen den beiden Lasteinleitungsfrequenzen ist rational, beträgt insbesondere beispielsweise 2:1 oder 1:2.

Durch die passiven Lasteinleitungsmittel werden die Systemeigenfrequenzen in die Schlagrichtung und in die Schwenkrichtung so angepasst, dass diese jeweils nicht mehr als 10 % von der Lasteinleitungsfrequenz in die jeweilige Richtung abweichen.

Insbesondere kann es sein, dass genau mit den Systemeigenfrequenzen angeregt wird, die Lasteinleitungsfrequenzen also den Systemeigenfrequenzen in die jeweilige Richtung entsprechen. Dadurch lassen sich die Prüfdauer und der Energieverbrauch weiter reduzieren.

Es kann aber auch sein, dass die Lasteinleitungsfrequenzen gegenüber den in die jeweilige Richtung herrschenden Systemeigenfrequenzen verstimmt werden, also beispielsweise eine Abweichung von höchstens 10 % oder höchstens 5 % oder höchstens 2 % oder höchstens 1 % gegenüber der Systemeigenfrequenz eingestellt wird. Dadurch kann eine zusätzliche Last in das Rotorblatt 1 eingebracht werden.

Die Aktuatoren 5A, 5B der aktiven Lasteinleitungsmittel sind als hydraulische, pneumatische oder elektrische Aktuatoren ausgebildet. Im vorliegenden Beispiel sind sie extern verankert, wodurch die beschriebene mögliche zusätzliche Lasteinleitung durch Verstimmung der Anregungsfrequenzen vorteilhaft erreicht werden kann. Es ist allerdings auch möglich, die aktiven Lasteinleitungsmittel als Massenerreger auszubilden, das heißt als an dem Rotorblatt 1 fixierte Aktuatoren, die eine daran befestigte Masse zyklisch bewegen.

Bei dem vorgeschlagenen Verfahren bzw. den dazugehörigen Prüfvorrichtungen wird üblicherweise zumindest eines der passiven Lasteinleitungsmittel als entkoppelte Masse oder als elastisches Element ausgestaltet und mit dem Boden oder der Wand verbunden. Weiterhin ist es typisch bei dem Verfahren bzw. den Prüfvorrichtungen, dass mindestens ein passives Lasteinleitungsmittel zur Lasteinleitung in die Schwenkrichtung und mindestens ein passives Lasteinleitungsmittel zur Lasteinleitung in die Schlagrichtung eingerichtet wird.

Zur Veranschaulichung der Erfindung sei noch ein Beispiel unter Verwendung von spezifischen Zahlenwerten genannt: Es kann beispielsweise sein, dass das Rotorblatt 1 im unpräparierten Zustand eine Eigenfrequenz in Schlagrichtung von 0,7 Hz und eine Eigenfrequenz in Schwenkrichtung von 0,9 Hz aufweist. Dann kann beispielsweise eine Anpassung der Eigenfrequenzen über die Anbringung der passiven Lasteinleitungsmittel erfolgen, bei der die Systemeigenfrequenz in die Schlagrichtung auf 0,9 Hz angehoben wird, um ein Frequenzverhältnis von f_{Schiag}:f_{Schwenk} = 1:1 herzustellen. Es kann aber auch die Systemeigenfrequenz in die Schwenkrichtung auf 1,4 Herz angehoben werden, um ein Frequenzverhältnis von f_{Schlag}:f_{Schwenk} = 1:2 herzustellen.

Dann kann die Lasteinleitung mit dem entsprechenden Frequenzverhältnis in Resonanz erfolgen, d.h. die Lasteinleitungsfrequenz kann jeweils gleich der Systemeigenfrequenz gewählt werden. Die Zyklen lassen sich dann gut beobachten und zählen. Im Falle des Frequenzverhältnisses 1:1 können beispielsweise für jede Richtung 3 Mio. Zyklen durchgeführt werden. Beim Frequenzverhältnis von 1:2 können beispielsweise in die Schlagrichtung 1 Mio.

Zyklen und in die Schwenkrichtung 2 Mio. Zyklen durchgeführt werden, wobei die Prüfung vorzugsweise für beide Richtungen gleichzeitig beendet wird. Ein Frequenzverhältnis von 2:1 ist also beispielsweise dann vorteilhaft, wenn in eine Richtung zum Einbringen der angestrebten Belastung doppelt so viele Zyklen vorgesehen sind wie in die andere Richtung.

Zum Einstellen und Aufrechterhalten des Frequenzverhältnisses weist der Prüfstand eine Steuerungs- und/oder Regelungsvorrichtung auf. Dadurch wird es ermöglicht, dass das Blatt über die gesamte Prüfdauer hinweg Bewegungen vollführt, die geschlossenen Lissajous-Figuren entsprechen.

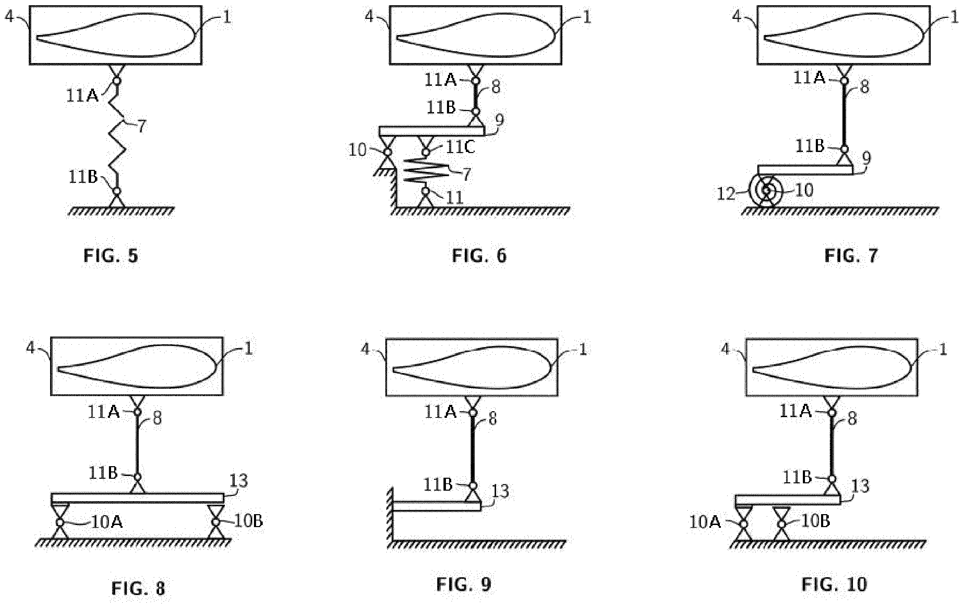

In den Figuren 5 bis 16 werden Möglichkeiten für aktive und passive Lasteinleitungsmittel dargestellt und erläutert, die in Prüfvorrichtungen bzw. Verfahren gemäß dieser Anmeldung eingesetzt und miteinander kombiniert werden können, indem sie am gleichen Rotorblatt -- an demselben oder an unterschiedlichen Lastrahmen -- angeordnet werden. Durch diese Lasteinleitungsmittel können die während der Prüfung herrschenden Biegemomente gezielt modifiziert werden. Dabei ist jeweils ein Schnitt durch das Rotorblatt 1, orthogonal zur Längsachse des Rotorblatts 1 gezeigt.

Figur 5 zeigt ein passives Lasteinleitungsmittel, bei dem eine Feder 7 als elastisches Element über Gelenke 11A, 11B mit dem Boden 3 und einer Unterseite eines Lastrahmens 4 verbunden ist, so dass eine Federkraft durch Kompression oder Expansion der Feder in die Schlagrichtung des Rotorblatts 1 wirkt.

Figur 6 zeigt ein passives Lasteinleitungsmittel mit einer Feder 7 als elastischem Element, die hier mit der Unterseite eines Hebelarms 9 verbunden ist, der durch ein Scharnier 10 beweglich angeordnet ist und seinerseits über eine Stange 8 mit der Unterseite des Lastrahmens 4 verbunden ist. Die Anordnung wirkt in die Schlagrichtung.

Bei der Anordnung aus Figur 6 kann dank des zwischen Rotorblatt 1 und Boden angeordneten Hebelarms 9 die auf das Rotorblatt 1 wirkende Kraft unabhängig vom Abstand zwischen Boden und Rotorblatt 1 eingestellt werden. So können beispielsweise die Länge der Feder 7, ihre Stärke sowie der Abstand zwischen Scharnier 10 und Feder 7 sowie zwischen Feder 7 und Stange 8 variiert werden.

Der Aufbau aus Figur 6 kann analog auch für ein aktives Lasteinleitungsmittel genutzt werden, indem die Feder 7 durch einen Aktuator ersetzt wird.

Figur 7 zeigt eine Anordnung zur passiven Lasteinleitung, bei der ein Hebelarm 9 auf einem als Torsionsfeder 12 ausgebildeten elastischen Element fixiert ist. Der Hebelarm bewegt sich bei Verformung der Torsionsfeder 12 und überträgt eine von der Torsionsfeder 12 verursachte Kraft über eine Stange 8 von unten in den Lastrahmen 4, so dass sie in die Schlagrichtung des Rotorblatts 1 wirkt. Durch die Länge des Hebelarms 9 kann hier die Wirkung der Torsionsfeder 12 auf das Rotorblatt 1 eingestellt werden.

Figur 8 zeigt ein passives Lasteinleitungsmittel, bei dem ein elastisches Element bereitgestellt wird, indem ein verformbarer Balken 13 an zwei entgegengesetzten Enden auf Scharnieren 10A, 10B horizontal gelagert wird, so dass er sich in der Mitte durchbiegen kann. In der Mitte des Balkens 13 befindet sich eine Stange 8, die sich vertikal nach oben erstreckt und unten an dem Lastrahmen angreift, um eine Kraft in Schlagrichtung auf das Rotorblatt 1 zu bewirken. Der Balken 13 ist aus einem Faserverbundwerkstoff hergestellt, der Glasfasern und/oder Kohlefasern enthält, um den starken Belastungen während der Rotorblattprüfung 1 standhalten zu können und die benötigten elastischen Eigenschaften aufzuweisen. Durch den Abstand zwischen den beiden Scharnieren 10A, 10B kann die durch den Balken wirkende Federkraft modifiziert werden.

Figur 9 zeigt eine Ausführung eines elastischen Elements, das als flexibler Balken 13 ausgebildet ist, der nur an einer Seite befestigt ist. Der Balken ist an einer Wand oder an einer Erhebung derart befestigt, dass er sich horizontal von seiner Befestigung aus erstreckt und unter elastischer Verformung nach oben und unten ausgelenkt werden kann. Am der Befestigung abgewandten Ende ist der Balken 13 über eine Stange 8 mit der Unterseite des Lastrahmens 4 verbunden, so dass die von der Verformung des Balkens 13 herrührenden Kräfte in die Schlagrichtung des Rotorblatts wirken.

Figur 10 zeigt eine ähnliche Ausführung eines passiven Lasteinleitungsmittels wie die Figur 9, wobei der Balken am der Stange 8 abgewandten Ende anstatt an einer Wand oder einer Erhebung auf zwei nebeneinander angeordneten Scharnieren 10A, 10B angeordnet ist, die den Balken 13 stützen, so dass sich das Ende mit der Stange 8 weiter verformen kann.

Figur 11 zeigt eine ähnliche Anordnung wie die Figur 8, wobei anstatt des Balkens 13 eine Blattfeder 14 an entgegengesetzten Ende auf zwei Scharnieren 10A, 10B gelagert wird, so dass sich ihre Mitte, die über eine Stange 8 mit dem Lastrahmen 4 verbunden ist, durchbiegen kann. Die Blattfeder 14 kann aus einem Faserverbundwerkstoff mit Glasfasern und/oder Kohlefasern hergestellt sein.

Bei den Ausführungen aus den Figuren 5 bis 11, bei denen elastische Elemente in die vertikale Richtung wirken, können die elastischen Elemente mit einer Vorspannung bereitgestellt werden, so dass ein aufgrund der Schwerkraft auf das Rotorblatt 1 wirkendes Mittelbiegemoment zumindest teilweise kompensiert wird. Das kann beispielsweise zum erfindungsgemäßen Erreichen der vorgegebenen Sollbiegemomentverteilung nötig sein, um eine Überlast in eine Auslenkrichtung des Rotorblatts 1 zu vermeiden. Es kann aber auch dazu dienen, das Mittelbiegemoment beliebig auf ein Sollmittelbiegemoment einzustellen. Diese Einstellung kann dabei auch in die Schwenkrichtung vorgenommen werden.

Figur 12 zeigt eine Ausführung eines passiven Lasteinleitungsmittels als extern verankerte entkoppelte Masse. Es handelt sich um die gleiche Ausführung wie in den Figuren 3 und 4, die in die Schlagrichtung wirkt. Ein Vorteil liegt darin, dass das Schwingverhalten anders als bei einer fixierten Masse, die direkt am Lastrahmen 4 befestigt ist und mit ihm schwingt, gezielt in nur eine Richtung verändert werden kann. In der gezeigten Konfiguration wirkt die entkoppelte Masse 6 sowohl als Schwingmasse für die Schlagrichtung, als auch entgegen der Schwerkraft gerichtete Ausgleichskraft zur Vermeidung einer durch die Schwerkraft bedingten Überlast.

Figur 13 zeigt ein passives Lasteinleitungsmittel mit einer Feder 7 als elastisches Element, die in die Schwenkrichtung wirkt. Dazu wird die Feder mit einem auf einem Scharnier 10 gelagerten Hebelarm 9 verbunden und wirkt zunächst auf den Hebelarm, der sich um das Scharnier 10 bewegt. Direkt oberhalb des Scharniers 10 befindet sich ein Winkelbalken 16, der sich nach oben erstreckt und daran wiederum eine horizontale Stange 8, die horizontal in den Lastrahmen 4 wirkt. Durch die Anordnung mit Winkelbalken 16 und Stange 8 wird die Kraft als so umgeleitet, dass die sich vertikal erstreckende Feder horizontal wirkt. Mit der Vorrichtung kann das Schwingverhalten bzw. die Biegemomentverteilung in die Schwenkrichtung beeinflusst werden, wobei das Schwingverhalten in die Schlagrichtung beibehalten werden kann. Die Konfiguration aus Figur 13 kann ohne Vorspannung des elastischen Elements ausgeführt werden, aber in Ausführungen, in denen eine Vorspannung in die Schwenkrichtung gewünscht ist, auch mit Vorspannung ausgeführt werden.

Figur 14 zeigt ein aktives Lasteinleitungsmittel, das in die Schwenkrichtung des Rotorblatts 1, also horizontal wirkt. Dabei ist die Anordnung zur Umlenkung der Wirkrichtung die bereits beispielsweise aus der Figur 13 bekannte Anordnung mit Winkelbalken 16 und horizontaler Stange 8, wobei anstatt der passiven Feder 7 ein aktiver Aktuator 5 eingesetzt wird.

Figur 15 zeigt einen Aufbau für eine entkoppelte Masse 6, die als Schwingmasse in die Schwenkrichtung wirken soll. Die Wirkrichtung wird wieder mittels Winkelbalken 16 und Stange 8 angepasst. Die entkoppelte Masse 6 bewirkt dabei außerdem eine Vorspannung bzw. mittlere Belastung in die Schwenkrichtung.

Figur 16 zeigt beispielhaft eine Kombination eines horizontal wirkenden und eines vertikal wirkenden Lasteinleitungsmittels, die beide am gleichen Lastrahmen 4 angreifen. Es handelt sich um zwei passive Lasteinleitungsmittel. Eine entkoppelte Masse 6 wirkt in die Schlagrichtung und ein elastisches Element wirkt in die Schwenkrichtung. Das elastische Element für die Schwenkrichtung ist als sich vertikal erstreckender Balken 13 ausgebildet, der am Boden 3 befestigt ist und über eine horizontale Stange 8A auf den Lastrahmen wirkt.

Die Ausführung illustriert, wie ein Lasteinleitungsmittel für jede der beiden Richtungen an einem einzigen Lastrahmen bereitgestellt werden kann. Dabei können auch andere Arten von Lasteinleitungsmitteln miteinander kombiniert werden. So kann beispielsweise jedes der Lasteinleitungsmittel aus den Figuren 5 bis 12 mit jedem der Lasteinleitungsmittel aus den Figuren 13 bis 15 kombiniert werden, um eine Biegemomentverteilung zu erreichen, die zum Beispiel höchstens 10 % von der Sollbiegemomentverteilung abweicht.

Die entkoppelte Masse 6 bewirkt im gezeigten Beispiel eine Vorspannung in die Schlagrichtung, der Balken 13 bewirkt dagegen keine Vorspannung in die Schwenkrichtung.

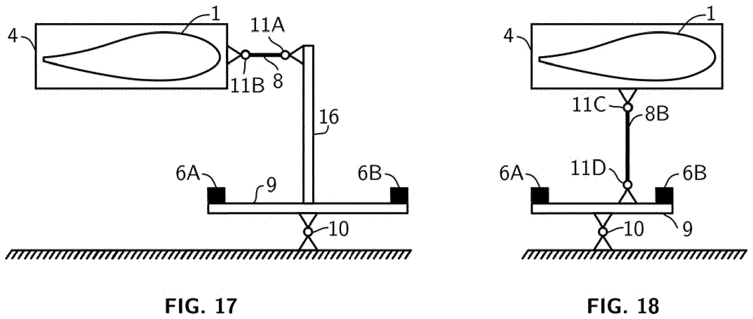

Fig. 17 zeigt ein passives Lasteinleitungsmittel für die Schwenkrichtung, das zwei gleich große entkoppelte Massen 6A, 6B umfasst, die an entgegengesetzten Enden eines mittig auf einem Scharnier 10 gelagerten Hebelarms sitzen. Direkt oberhalb des Scharniers 10 wird ein vertikaler Winkelbalken 16 bereitgestellt und dieser mit einer horizontalen Stange 8 mit dem Lastrahmen 4 verbunden. Durch die so angeordneten entkoppelten Massen wirkt das Lasteinleitungsmittel als Schwingmasse ausschließlich in die Schwenkrichtung, wobei aufgrund der ausgleichenden Positionierung der entkoppelten Massen 6A, 6B eine Vorspannung bzw. mittlere Belastung in die Schwenkrichtung vermieden wird. Durch Verschieben einer oder beider Massen 6A, 6B oder den Einsatz unterschiedlich großer Massen 6A, 6B können wirkende Schwingmasse sowie Vorspannung bzw. mittlere Belastung eingestellt werden.

Fig. 18 Ein asymmetrisch wirkendes passives Lasteinleitungsmittel für die Schlagrichtung. Es umfasst zwei entkoppelte Massen, die wie in Fig. 17 an entgegengesetzten Enden eines Balkens 9 angeordnet sind, der mittig auf einem Gelenk 10 sitzt. Eine Stange 8B ist mit der Unterseite des Rotorblatts 1 verbunden. Die Stange 8B ist gegenüber dem Gelenk 10 verschoben um bei Bewegung des Balkens nach oben und unten bewegt zu werden, was einer Schwingmassenlast auf das Rotorblatt 1 in die Schlagrichtung entspricht. Durch die Größe der Massen 6A, 6B, ihre Position auf dem Balken 9 sowie die Position der Stange 8B auf dem Balken 9 können die in die Schlagrichtung wirkende Schwingmassenbelastung und die mittlere Last angepasst werden.

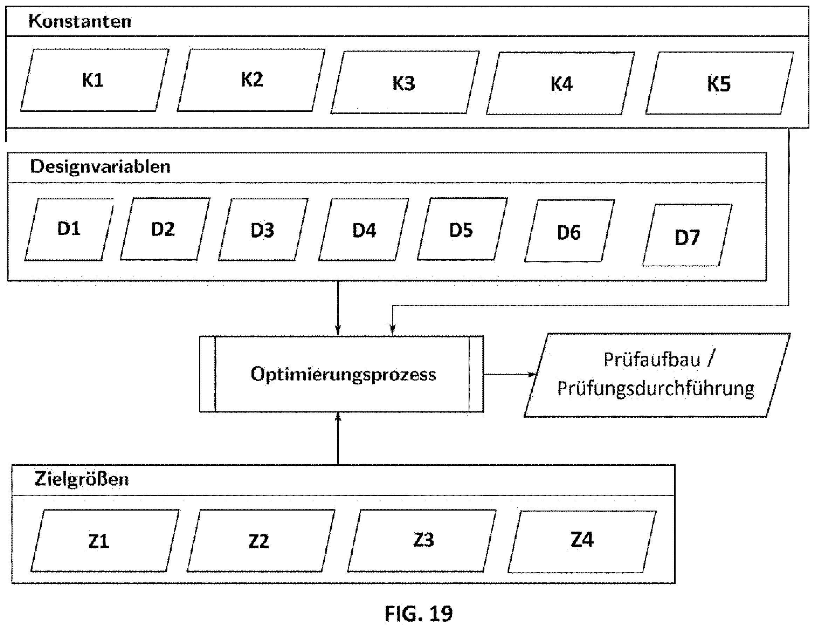

Figur 19 illustriert einen Optimierungsprozess, mit dessen Hilfe ein Prüfaufbau erreicht werden kann und Parameter für die anschließende Prüfung bestimmt werden können.

In den Optimierungsprozess gehen als Eingangsgrößen Konstanten bzw. Nebenbedingungen K1-K5 ein, die vorgegeben und nicht veränderbar sind, sowie bestimmte Zielgrößen Z1-Z4, die es möglichst gut anhand der Optimierung zu erreichen. In einem hochdimensionalen Optimierungsverfahren werden dann DesignvariablenD1-D7 angepasst, um zu einem Aufbau und einer Versuchsdurchführung zu gelangen, mit denen die Zielgrößen möglichst gut erreicht werden.

Zu den Konstanten bzw. Nebenbedingungen K1-K4 zählen:
- K1: das Frequenzverhältnis zwischen in Schlagrichtung und in Schwenkrichtung eingeleiteter Last. Es ist limitiert auf f_{Schiag}:f_{Schwenk} = n₁:n₂, wobei n₁ und n₂ ganze Zahlen sind. Vorzugsweise ist f_{Schlag}:f_{Schwenk}=1:2 oder f_{Schlag}:f_{Schwenk} = 1:1.
- K2: Der zulässige Montagebereich der Lastrahmen. Für jedes Rotorblatt 1 ist typischerweise ein Mindestabstand von der Einspannstelle 1' sowie ein Mindestabstand von der Blattspitze gegeben. Es können auch dazwischen design-kritische Bereiche definiert werden, in denen sich kein Lastrahmen befinden darf. Außerdem ist üblicherweise ein Mindestabstand zwischen zwei benachbarten Lastrahmen vorgegeben.
- K3: Maximale Auslenkung der Aktorik. Aufgrund der Ausgestaltung der verwendeten Aktorik, aber auch aufgrund der Abmessungen einer Halle, in der die Prüfvorrichtung angeordnet wird, ist die maximale Auslenkung, die nicht überschritten werden kann, vorgegeben.
- K4: Maximale Kraft der Aktorik. Die Kraft der Aktorik ist durch ihre Ausgestaltung sowie durch Belastungsgrenzen des Rotorblatts begrenzt.
- K5: Phasenwinkel zwischen der Lasteinleitung in die Schlagrichtung und die Schwenkrichtung. Der Phasenwinkel kann eingestellt werden, um eine Überlagerung der Belastung in die Schlagrichtung und die Schwenkrichtung zu modifizieren. Es kann vorgesehen sein, dass der Phasenwinkel, beispielsweise im Falle von f_{Schiag}:f_{Schwenk} = 1:1 als 90° gewählt wird, um bei maximaler Belastung in eine der Richtungen keine Belastung in die jeweils andere zu erhalten. Bei f_{Schiag}:f_{Schwenk} = 1:2 kann als Phasenwinkel beispielsweise 0° oder 180° gewählt werden.

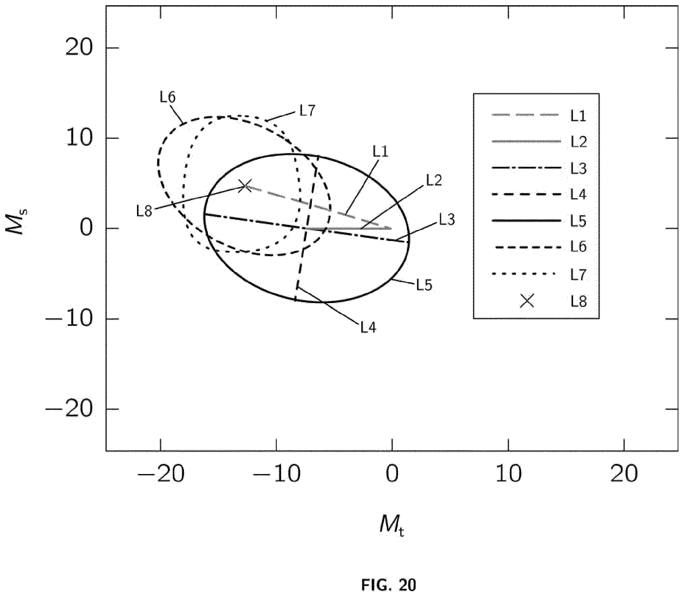

Größen, die anhand der Optimierung möglichst genau erreicht werden sollen, sind die Zielgrößen Z1-Z3:
- Z1: Biegemomentverteilung. Zuvorderst soll erreicht werden, dass die im Verfahren eingeleiteten Biegemomente der Sollbiegemomentverteilung möglichst genau entsprechen. Ein Unterschreiten der Sollbiegemomentverteilung wird dabei komplett vermieden. Es kann weiterhin beispielsweise ein lokales Überschreiten des Sollbiegemoments von maximal 10 % angestrebt werden. Die Zielgröße Z1 kann gegenüber anderen Zielgrößen priorisiert werden.
- Z2: Energieverbrauch. Der Energieverbrauch soll typischerweise so gering wie möglich gehalten werden. Durch die Angleichung der Lasteinleitungsfrequenzen und der Systemeigenfrequenzen aneinander kann der Energieverbrauch optimiert werden.
- Z3: Prüfdauer. Die Prüfdauer soll ebenfalls so gering wie möglich gehalten werden, was auch mitunter durch die Angleichung der Lasteinleitungsfrequenzen und der Systemeigenfrequenzen aneinander erreicht werden kann.
- Z4: Sollmittelbiegemoment. Wenn die Feldbedingungen des Rotorblattes aus einer Messung oder einer Simulation bekannt sind, kann ein daran angepasstes Sollmittelbiegemoment eingestellt werden (siehe hierzu auch Figur 20).

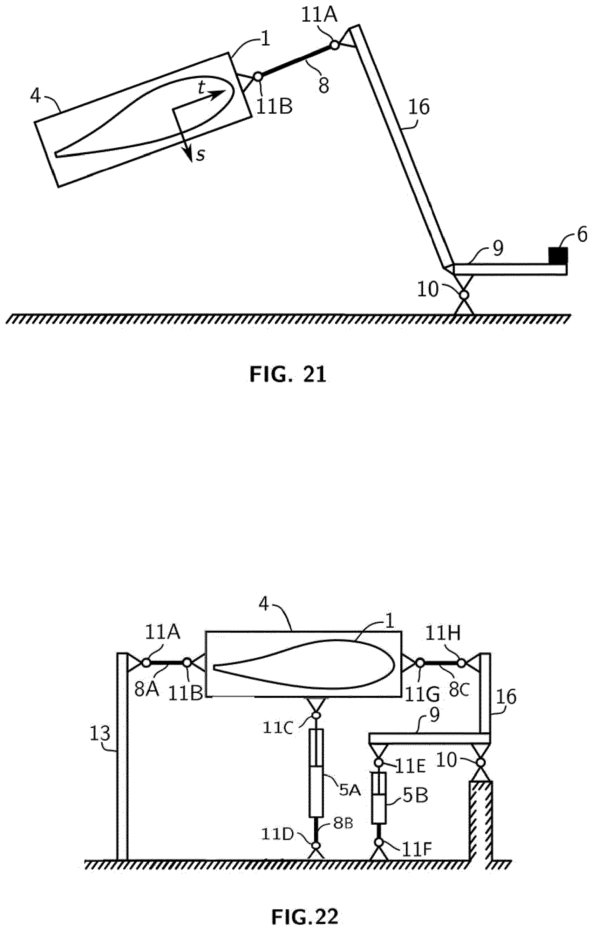

Zum Erreichen der Zielgrößen Z1-Z3 stehen als Stellschrauben der Optimierung die Designvariablen D1-D6 zur Verfügung, die variiert werden können:
- D1: Position der Lastrahmen. Die Position der Lastrahmen kann im durch die Konstante K2 definierten Rahmen verändert werden, so dass zusätzliche Lastrahmen in Bereichen großer Abweichungen von der Sollbiegemomentverteilung angeordnet werden können, über die dann mittels der Lasteinleitungsmittel Last eingeleitet wird (s. D3-D5).
- D2: Anzahl der Lastrahmen. Die Anzahl der Lastrahmen kann, ebenfalls wieder unter Beachtung der Konstante K2, verändert werden. Dabei wird typischerweise darauf geachtet, dass die Anzahl Lastrahmen so gering wie möglich gehalten wird, da in unmittelbarer Nähe eines Lastrahmens das Rotorblatt 1 nicht oder nicht stark genug belastet wird. Beispielsweise können 2 oder 3 Lastrahmen angestrebt sein.
- D3: Elastische Elemente. Elastische Elemente, wie in den Figuren oben beschrieben, stellen ein mögliches passives Lasteinleitungsmittel dar, mit dem die Biegemomentverteilung beeinflusst werden kann und die Systemeigenfrequenz verändert werden kann. Sie können so eingesetzt werden, dass die Parameter nur in die Schlagrichtung oder in die Schwenkrichtung verändert werden. Sie können an einem oder mehreren der Lastrahmen befestigt werden. Sie können mit oder ohne Vorspannung bzw. mittlerer Last ausgebildet werden.
- D4: Fixierte Massen. Fixierte Massen können zur Einstellung von Biegemomenten und Systemeigenfrequenzen ebenfalls herangezogen werden. Sie bewirken eine Veränderung der Biegemomente und der Systemeigenfrequenzen in beide Richtungen und werden typischerweise dann eingesetzt, wenn eine Anpassung notwendig ist, die das erfordert. Die fixierten Massen können an einem oder mehreren der Lastrahmen befestigt werden.
- D5: Entkoppelte Massen, entkoppelte Massen können wie elastische Elemente gezielt für eine Anpassung in die Schlagrichtung oder in die Schwenkrichtung eingesetzt werden. Die entkoppelten Elemente können eine im Vergleich zu den elastischen Elementen umgekehrte Wirkrichtung aufweisen und dementsprechend für entgegengesetzte Korrekturen eingesetzt werden. Die entkoppelten Massen können an einem oder mehreren der Lastrahmen befestigt werden. Sie können mit oder ohne Vorspannung bzw. mittlerer Last ausgebildet werden.
- D6: Frequenzoffset der Lasteinleitungsfrequenzen. Die Lasteinleitungsfrequenzen können, wie erwähnt, zum besseren Erreichen der Sollbiegemomentverteilung gegenüber den Systemeigenfrequenzen verstimmt werden. Das kann zulasten des Energieverbrauchs gehen.
- D7: Anstellwinkel des Rotorblattes. Der Anstellwinkel (auch Pitchwinkel genannt), kann modifiziert werden, um die Lasteinleitung anzupassen (siehe hierzu auch Figuren 20 und 21).

Aus dem Optimierungsprozess folgt dann eine konkrete Anordnung von Lastrahmen und von daran angeordneten aktiven und passiven Lasteinleitungsmitteln, beispielsweise der in Figur 4 gezeigte Aufbau. Ebenso werden die Lasteinleitungsfrequenzen ermittelt, mit denen im Prüfverfahren jeweils angeregt werden soll. Es kann auch sein, dass die Anzahl Zyklen auch im Optimierungsprozess bestimmt wird.

An dieser Stelle sei zur Veranschaulichung ein Beispiel ausgeführt.

Für ein beispielhaft angenommenes Rotorblatt können in unpäpariertem Zustand eine Eigenfrequenz in Schlagrichtung 0,5Hz und eine Eigenfrequenz in Schwenkrichtung 1 Hz betragen. Um die angestrebte Belastung mindestens zu erreichen werden in diesem Beispiel in Schlagrichtung 1 Mio. Zyklen und in Schwenkrichtung 3 Mio. Zyklen benötigt. Daraus ergäbe sich nach konventionellen Methoden eine Prüfdauer von 23,1 Tagen für die Schlagrichtung und 34,7 Tagen für die Schlagrichtung, was einer Gesamtprüfdauer von 57,8 Tagen entspräche. Gemäß dem hier vorgestellten Verfahren können die Eigenfrequenzen in Systemeigenfrequenzen überführt werden. Diese können ein rationales Verhältnis von 1:1 aufweisen, etwa beide 0,75 Hz betragen. Die Amplitude der Lasteinleitung in die Schlagrichtung kann so verändert werden, dass die angestrebte Schädigung auch in diese Richtung nach 3 Mio Zyklen erreicht wird. Die Prüfung erfolgt dann in beide Richtungen parallel, wird für beide Richtungen gleichzeitig abgeschlossen und beträgt insgesamt 46,3 Tage. Damit ist die Prüfdauer gegenüber der konventionellen Vorgehensweise um 20 % reduziert.

In Figur 20 sind die Biegemomentenvektorenanteile für einen Querschnitt eines Rotorblattes in Schlagrichtung Mₜ und in Schwenkrichtung Mₛ aufgetragen. Mₛ wirkt um eine s-Achse und Mₜ wirkt um eine t-Achse (siehe auch Figur 21 zur Definition der Achsen in Bezug auf das Rotorblatt). Eine Ellipse L5 entspricht der Überlagerung eines uni-axialen Schwenktests L4 und eines Schlagtests L3 in einem bi-axialen Test bei einem Frequenzverhältnis von 1:1 und einem Phasenwinkel von 90°. Durch Gravitation wird ein Mittelbiegemoment in Schlagrichtung bewirkt, das mit L2 gekennzeichnet ist und in der Darstellung als horizontale Linie verläuft. Die Ellipse wird durch den Einfluss der Gravitation entsprechend entlang L2 verschoben.

In der Figur 20 ist weiterhin der Umriss einer Wahrscheinlichkeitswolke L7 eingezeichnet. Diese Wahrscheinlichkeitswolke L7 gibt im Feld typischerweise auftretende Momentenvektorpfade wieder. Derartige Wahrscheinlichkeitswolken werden unter Zuhilfenahme aeroservoelastischer Mehrkörpersimulationen, typischerweise für unterschiedliche im Feld auftretende Belastungsfälle, ermittelt. Die Wahrscheinlichkeitswolke L7 gibt also einen Bereich an, in dem die Momentenvektorpfade unter realistischen Bedingungen verlaufen.

Durch statische Mittelbiegemomente in Schlag- und Schwenkrichtung (Vektor L1), die mit den in diesem Dokument beschriebenen entkoppelten Massen oder vorgespannten Federelementen eingeleitet werden, lässt sich der Mittelpunkt der im hier beschriebenen Prüfverfahren erreichten Ellipse L5, die unter Einfluss der Gravitation entlang L2 verschoben wurde, nun weiterhin entlang des Vektors L1 hin zu einem Punkt L8 verschieben, der ein Zentrum der Wahrscheinlichkeitswolke L7 darstellt. Das entspricht der Einstellung des Sollmittelbiegemoments. Alternativ oder zusätzlich kann durch anstellen (pitchen) des Rotorblattes die Wirkrichtung des Gravitationsvektors L2 relativ zu der Ellipse L5 so beeinflusst werden, dass sie mit der Wirkrichtung von L1 übereinstimmt. Durch eine Phasenwinkelanpassung von größer/kleiner 90° lässt sich die Ellipse gegen/im Uhrzeigersinn drehen. Werden weiterhin Schwenk- und Schlagamplitude skaliert, ist es möglich, die Ellipse L5 in die Ellipse L6 zu überführen und somit an die im Feld auftretende Momentenwolke L7 anzunähern.

Der Vorteil dieses Verfahrens ist eine realitätsnähere (näher an den am häufigsten auftretenden Feldbedingungen befindliche) Belastung des Rotorblattes. Weiterhin verändert sich durch die Verschiebung des Mittelpunktes der Ellipse ein auftretendes Spannungsverhältnis R, was zu einer Reduktion der Testzyklen führen kann, wenn die Sollbiegemomentenverteilung aufgrund des veränderten Sollmittelbiegemoments angepasst wird, so dass eine gleichmäßige Zielschädigung der lasttragenden Bereiche entlang der zu prüfenden Bereiche des Blattes eintritt (siehe hierzu beispielsweise die Publikation Rosemeier et al. "Benefits of subcomponent over full-scale blade testing elaborated on a trailing-edge bond line design validation", Wind Energ. Sci., 3, 163-172, 2018, https://doi.org/10.5194/wes-3-163-2018).

Figur 21 zeigt einen Aufbau für eine entkoppelte Masse 6., die als Schwingmasse in die Schwenkrichtung eines angestellten (gepitchten) Rotorblattes wirken soll. Die Wirkrichtung wird mittels Winkelbalken 16 und Stange 8 angepasst. Die Stange 8 ist in einem rechten Winkel zum Winkelbalken 16 montiert. Der Hebelarm 9 ist parallel zum Boden montiert, so dass die Wirkrichtung der Gravitationsbeschleunigung der Masse 6 ebenfalls senkrecht zum Boden ausgerichtet ist. Die entkoppelte Masse 6 bewirkt dadurch eine Vorspannung bzw. mittlere Belastung in die Schwenkrichtung. Die Figur zeigt den ausgelenkten Zustand.

Figur 21 zeigt das Koordinatensystem, um dessen Achsen die Vektoren wirken, die in Figur 20 gezeigt sind. Das in der Figur gezeigte Rotorblatt ist angestellt (gepitcht), um den Einfluss des von der Gravitation hervorgerufenen Mittelbiegemoments in Schwenk- und Schlagrichtung anzupassen. Die Stange 8 ist dabei schräg angeordnet, so dass ihre Wirkrichtung in dem gezeigten Ruhezustand in eine Bewegungsrichtung einer Eigenmode des Systems in Schwenkrichtung verläuft.

Figur 22 zeigt eine Ausführung der Prüfvorrichtung, die für die Durchführung des beschriebenen Verfahrens eingerichtet ist, wobei ein Lastrahmen 4 bereitgestellt ist sowie zwei aktive Lasteinleitungsmittel, die jeweils an dem Lastrahmen 4 angreifen, wobei ein erstes aktives Lasteinleitungsmittel 5B zur Lasteinleitung in eine Schwenkrichtung des Rotorblatts 1 eingerichtet ist, und ein zweites aktives Lasteinleitungsmittel 5A zur Lasteinleitung in die Schlagrichtung des Rotorblatts 1 eingerichtet ist. Weiterhin ist ein passives Lasteinleitungsmittel 13 vorhanden, das ebenfalls an dem Lastrahmen 4 angreift. Das passive Lasteinleitungsmittel 13 ist als elastischer Balken ausgeführt und wirkt in die Schwenkrichtung. Alternativ oder zusätzlich kann in möglichen Ausführungen des Prüfstands ein passives Lasteinleitungsmittel für die Schlagrichtung an demselben Lastrahmen 4 angreifen. Bei der Durchführung des anmeldungsgemäßen Verfahrens kann eine Systemeigenfrequenz für die Schwenkrichtung und/oder für die Schlagrichtung durch das eine passive Lasteinleitungsmittel 13 verändert werden. Es wird ein zyklisches Lasteinleiten mittels der beiden aktiven Lasteinleitungsmittel 5A, 5B bewirkt, wobei eine Lasteinleitungsfrequenz des ersten aktiven Lasteinleitungsmittels 5B und eine Lasteinleitungsfrequenz des zweiten aktiven Lasteinleitungsmittels 5A so gewählt werden, dass ihr Verhältnis rational ist. Dabei bedarf es in einer möglichen Ausführung des Prüfstands bzw. Verfahrens keiner weiteren Lastrahmen.

### Bezugszeichenliste

- 1: Rotorblatt
- 1': Einspannstelle des Rotorblatts
- 2: Einspannvorrichtung
- 3: Boden
- 4: Lastrahmen
- 5: Aktuator
- 5': Aktuatorenangriffsstelle
- 6: Entkoppelte Masse
- 7: Feder
- 8: Stange
- 9: Hebelarm
- 10: Scharnier
- 11: Gelenk
- 12: Torsionsfeder
- 13: Elastischer Balken
- 14: Blattfeder
- 15: Fixierte Masse
- 16: Winkelbalken

Wenn mehrere Elemente einer Kategorie in einer Figur vorhanden sind, werden diese zur Unterscheidung zusätzlich mit einem Buchstaben versehen.

### Konstanten:

| | |
|---|---|
| K1 | Frequenzverhältnis Schlagrichtung/Schwenkrichtung |
| K2 | Zulässiger Montagebereich der Lastrahmen |
| K3 | Maximale Auslenkung der Aktorik |
| K4 | Maximale Kraft der Aktorik |
| K5 | Phasenwinkel zwischen Lasteinleitung Schlagrichtung/Schwenkrichtung |

### Designvariablen:

| | |
|---|---|
| D1 | Position der Lastrahmen |
| D2 | Anzahl der Lastrahmen |

| | |
|---|---|
| D3 | Elastischen Elemente |
| D4 | Fixierte Massen |
| D5 | Entkoppelte Massen |
| D6 | Frequenzoffset der Lasteinleitungsfrequenzen zu den Systemeigenfrequenzen |
| D7 | Anstellwinkel (Pitchwinkel) des Rotorblatts |

### Zielgrößen:

| | |
|---|---|
| Z1 | Sollbiegemomentenverteilung |
| Z2 | Minimaler Energieverbrauch |
| Z3 | Minimale Prüfdauer |
| Z4 | Sollmittelbiegemoment (Mittelpunkt) |

## Patentansprüche

1. Verfahren zum Prüfen eines Rotorblatts (1) einer Windenergieanlage, wobei eine Sollbiegemomentverteilung vorgegeben ist, zumindest die Schritte umfassend:
- Einspannen des Rotorblatts (1) in eine Einspannvorrichtung (2), so dass sich eine Längsachse des Rotorblatts (1) ausgehend von einer Einspannstelle (1') des Rotorblatts erstreckt,
- Befestigen eines oder mehrerer Lastrahmen (4) an dem Rotorblatt,
- Bereitstellen mindestens zweier aktiver Lasteinleitungsmittel, die jeweils an einem der Lastrahmen (4) angreifen, wobei ein erstes (5B) der mindestens zwei aktiven Lasteinleitungsmittel zur Lasteinleitung in eine Schwenkrichtung des Rotorblatts (1) eingerichtet wird und ein zweites (5A) der mindestens zwei aktiven Lasteinleitungsmittel zur Lasteinleitung in eine Schlagrichtung des Rotorblatts (1) eingerichtet wird,
- Bereitstellen mindestens zweier passiver Lasteinleitungsmittel, die jeweils an einem der Lastrahmen (4) angreifen,
wobei die beiden passiven Lasteinleitungsmittel so ausgestaltet sind, dass sie jeweils nur in eine Richtung wirken,
wobei mindestens eines der mindestens zwei passiven Lasteinleitungsmittel bereitgestellt wird zum Einstellen der Systemeigenfrequenz in die Schlagrichtung und mindestens eines der mindestens zwei passiven Lasteinleitungsmittel bereitgestellt wird zum Einstellen der Systemeigenfrequenz in die Schwenkrichtung,
wobei zumindest eines der mindestens zwei passiven Lasteinleitungsmittel als elastisches Element ausgebildet ist oder als entkoppelte Masse (6), die auf einer Wippe gelagert ist,
wobei für ein System, welches das Rotorblatt und die mindestens zwei passiven Lasteinleitungsmittel umfasst, eine Systemeigenfrequenz für die Schwenkrichtung und für die Schlagrichtung durch die mindestens zwei passiven Lasteinleitungsmittel verändert wird,
- zyklisches Lasteinleiten mittels der mindestens zwei aktiven Lasteinleitungsmittel, wobei eine Lasteinleitungsfrequenz f_{Schwenk} des ersten aktiven Lasteinleitungsmittels (5B) und eine Lasteinleitungsfrequenz f_{Schlag} des zweiten aktiven Lasteinleitungsmittels (5A) so gewählt werden, dass ihr Verhältnis rational ist, so dass f_{Schlag}:f_{schwenk}=n₁:n₂, wobei n₁ und n₂ natürliche Zahlen sind und n₁ und n₂ jeweils nicht größer als 5 sind, und wobei
die Lastrahmen (4) und die mindestens zwei aktiven Lasteinleitungsmittel und die mindestens zwei passiven Lasteinleitungsmittel an zuvor bestimmten Positionen angeordnet werden, die so gewählt sind, dass eine beim zyklischen Lasteinleiten eingeleitete Biegemomentverteilung die Sollbiegemomentverteilung nicht unterschreitet und nicht um mehr als 20 %, vorzugsweise nicht um mehr als 15 %, besonders bevorzugt nicht um mehr als 10 % übersteigt.

2. Verfahren gemäß Anspruch 1, wobei die mindestens zwei passiven Lasteinleitungsmittel so angeordnet werden, dass die Systemeigenfrequenz in die Schlagrichtung mit der Lasteinleitungsfrequenz in die Schlagrichtung übereinstimmt oder zum Einbringen einer zusätzlichen Belastung nicht mehr als 10 %, von der Systemeigenfrequenz in die Schlagrichtung abweicht und/oder wobei die mindestens zwei passiven Lasteinleitungsmittel so angeordnet werden, dass die Systemeigenfrequenz in die Schwenkrichtung mit der Lasteinleitungsfrequenz in die Schwenkrichtung übereinstimmt oder zum Einbringen einer zusätzlichen Belastung nicht mehr als 10 %, von der Systemeigenfrequenz in die Schwenkrichtung abweicht.

3. Verfahren gemäß einem der vorhergehenden Ansprüche, wobei die mindestens zwei aktiven Lasteinleitungsmittel zum Einstellen und Aufrechterhalten des Verhältnisses zwischen der Lasteinleitungsfrequenz des ersten aktiven Lasteinleitungsmittels (5B) und der Lasteinleitungsfrequenz des zweiten aktiven Lasteinleitungsmittels (5A) gesteuert oder geregelt werden.

4. Verfahren gemäß einem der vorhergehenden Ansprüche, wobei das Rotorblatt (1) derart eingespannt wird, dass sich die Längsachse des Rotorblatts (1) im Wesentlichen horizontal erstreckt und die Schwenkrichtung horizontal ausgerichtet ist.

5. Verfahren gemäß einem der vorhergehenden Ansprüche, wobei die mindestens zwei aktiven Lasteinleitungsmittel und/oder mindestens eines der mindestens zwei passiven Lasteinleitungsmittel extern verankert werden.

6. Verfahren gemäß einem der vorhergehenden Ansprüche, wobei das Verhältnis zwischen der Lasteinleitungsfrequenz des ersten Lasteinleitungsmittels (5B) und der Lasteinleitungsfrequenz des zweiten Lasteinleitungsmittels 1:1, 2:1 oder 1:2 beträgt.

7. Verfahren gemäß einem der vorhergehenden Ansprüche, wobei eine Verteilung im Feld auftretender Momentenvektorpfade ermittelt wird, vorzugsweise mittels einer aeroservoelastischen Mehrkörpersimulation, und ein Sollmittelbiegemoment durch die passiven Lasteinleitungsmittel, vorzugsweise durch die entkoppelten Massen (6) und/oder durch eine Vorspannung der elastischen Elemente, so eingestellt wird, dass ein Mittelpunkt von mittels der aktiven Lasteinleitungsmittel erzeugten Momentenvektorpfaden innerhalb der Verteilung der im Feld auftretenden Momentenvektorpfade liegt, wobei insbesondere die von den aktiven Lasteinleitungsmitteln erzeugten Momentenvektorpfade an eine Kontur der Verteilung der im Feld auftretenden Momentenvektorpfade angepasst werden, indem das Rotorblatt (1) im oder gegen den Uhrzeigersinn um seine Längsachse angestellt wird.

8. Verfahren gemäß Anspruch 7, wobei die von den aktiven Lasteinleitungsmitteln erzeugten Momentenvektorpfade an eine Kontur der Verteilung der im Feld auftretenden Momentenvektorpfade angepasst wird, indem ein Phasenwinkel zwischen der Lasteinleitung in die Schwenkrichtung und der Lasteinleitung in die Schlagrichtung eingestellt wird.

9. Verfahren gemäß einem der vorhergehenden Ansprüche, wobei das Verhältnis zwischen den Lasteinleitungsfrequenzen 1:1 ist und ein Phasenwinkel zwischen der Lasteinleitung in die Schwenkrichtung und der Lasteinleitung in die Schlagrichtung zwischen 0° und 180°, vorzugsweise zwischen 45° und 135°, besonders bevorzugt 90° beträgt.

10. Verfahren gemäß einem der Ansprüche 1 bis 9, wobei das Verhältnis zwischen den Lasteinleitungsfrequenzen 1:2 oder 2:1 ist und ein Phasenwinkel zwischen der Lasteinleitung in die Schwenkrichtung und der Lasteinleitung in die Schlagrichtung 0° oder 180° beträgt.

11. Verfahren gemäß einem der vorhergehenden Ansprüche, wobei ein Mindestabstand zwischen benachbarten Lastrahmen 1m beträgt.

12. Prüfvorrichtung zum Prüfen eines Rotorblatts (1) gemäß einem Verfahren nach einem der vorhergehenden Ansprüche, umfassend
- das Rotorblatt (1),
- eine Einspannvorrichtung (2) zum Einspannen des Rotorblatts (1) an einer Einspannstelle (1') des Rotorblatts (1), so dass sich eine Längsachse des Rotorblatts (1) von der Einspannstelle (1') ausgehend im Wesentlichen horizontal erstreckt,
einen oder mehrere Lastrahmen (4) zur Befestigung an dem Rotorblatt (1),
mindestens zwei aktive Lasteinleitungsmittel, die jeweils an einem der Lastrahmen (4) befestigt sind,
mindestens zwei passive Lasteinleitungsmittel, die jeweils an einem der Lastrahmen (4) befestigt,
wobei die beiden passiven Lasteinleitungsmittel so ausgestaltet sind, dass sie jeweils nur in eine Richtung wirken,
wobei mindestens eines der mindestens zwei passiven Lasteinleitungsmittel eingerichtet ist zum Einstellen der Systemeigenfrequenz in die Schlagrichtung und mindestens eines der mindestens zwei passiven Lasteinleitungsmittel eingerichtet ist zum Einstellen der Systemeigenfrequenz in die Schwenkrichtung,
wobei
mindestens eines der mindestens zwei aktiven Lasteinleitungsmittel zur Lasteinleitung in eine Schwenkrichtung in das Rotorblatt (1) eingerichtet ist und mindestens eines der mindestens zwei aktiven Lasteinleitungsmittel zur Lasteinleitung in eine Schlagrichtung in das Rotorblatt (1) eingerichtet ist,
und wobei mindestens eines der mindestens zwei passiven Lasteinleitungsmittel extern verankert ist und ein elastisches Element und/oder eine entkoppelte Masse umfasst, die auf einer Wippe gelagert ist, und dafür eingerichtet ist, eine Systemeigenfrequenz in die Schwenkrichtung oder in die Schlagrichtung einzustellen, für ein System, welches das Rotorblatt und die mindestens zwei passiven Lasteinleitungsmittel umfasst,
weiterhin eine Regelungsvorrichtung enthaltend, die dafür eingerichtet ist, eine Lasteinleitungsfrequenz f_{Schwenk} des ersten aktiven Lasteinleitungsmittels und eine Lasteinleitungsfrequenz f_{Schlag} des zweiten aktiven Lasteinleitungsmittels so zu regeln, dass ein Verhältnis zwischen diesen beiden Lasteinleitungsfrequenzen rational ist, so dass f_{Schlag}:f_{schwenk}=n₁:n₂, wobei n₁ und n₂ natürliche Zahlen sind und n₁ und n₂ jeweils nicht größer als 5 sind,
wobei die Lastrahmen (4) und die mindestens zwei aktiven Lasteinleitungsmittel und die mindestens zwei passiven Lasteinleitungsmittel an zuvor bestimmten Positionen angeordnet werden, die so gewählt sind, dass eine beim zyklischen Lasteinleiten eingeleitete Biegemomentverteilung die Sollbiegemomentverteilung nicht unterschreitet und nicht um mehr als 20 %, vorzugsweise nicht um mehr als 15 %, besonders bevorzugt nicht um mehr als 10 % übersteigt.

13. Prüfvorrichtung gemäß Anspruch 12, wobei die aktiven Lasteinleitungsmittel als hydraulischer, oder pneumatischer oder elektrischer Aktuator ausgebildet sind und vorzugsweise extern verankert sind.

14. Prüfvorrichtung gemäß einem der Ansprüche 12 oder 13, wobei das elastische Element als Feder oder Torsionsfeder oder Balken oder Blattfeder ausgebildet ist und vorzugsweise extern verankert ist.

15. Prüfvorrichtung, gemäß einem der Ansprüche 12 bis 14, wobei das elastische Element einen Faserverbundwerkstoff, vorzugsweise mit Glasfasern und/oder Kohlefasern umfasst.

## Claims

1. A method for testing a rotor blade (1) of a wind turbine, wherein a setpoint bending moment distribution is predetermined, comprising at least the steps:
- clamping the rotor blade (1) in a clamping device (2) so that a longitudinal axis of the rotor blade (1) extends from a clamping point (1') of the rotor blade,
- attaching one or more load frames (4) to the rotor blade,
- providing at least two active load-introducing means which each engage on one of the load frames (4), wherein a first (5B) of the at least two active load-introducing means is set up for introducing load in a pivot direction of the rotor blade (1) and a second (5A) of the at least two active load-introducing means is set up for introducing load in an impact direction of the rotor blade (1),
- providing at least two passive load-introducing means which each engage on one of the load frames (4), wherein the two passive load-introducing means are configured such that they each only act in one direction.
wherein at least one of the at least two passive load-introducing means is provided for adjusting the system natural frequency in the impact direction and at least at least one of the at least two passive load-introducing means is provided for adjusting the system natural frequency in the pivot direction,
wherein at least one of the at least two passive load-introducing means is formed as an elastic element or decoupled mass (6) that is mounted on a rocker,
wherein, for a system which comprises the rotor blade and the at least two passive load-introducing means, a system natural frequency for the pivot direction and for the impact direction is varied by the at least two passive load-introducing means,
- a cyclic introduction of load is effected by the at least two active load-introducing means, wherein a load introduction frequency f_{Schwenk} of the first active load-introducing means (5B) and a load introduction frequency f_{Schlag} of the second active load-introducing means (5A) are selected such that the ratio thereof is rational, so that f_{schlag}:f_{schwenk}=n₁:n₂, wherein n₁ and n₂ are natural numbers and n₁ and n₂ are each not greater than 5, and wherein
the load frames (4) and the at least two active load-introducing means and the at least two passive load-introducing means are arranged at previously determined positions which are selected in such a way that a bending moment distribution introduced during cyclic load introduction does not fall below the setpoint bending moment distribution and does not exceed it by more than 20%, preferably not by more than 15%, particularly preferably not by more than 10%.

2. The method according to claim 1, wherein the at least two passive load-introducing means are arranged such that the system natural frequency in the impact direction matches the load introduction frequency in the impact direction or, for applying an additional load, deviates no more than 10%, from the system natural frequency in the impact direction and/or wherein the at least two passive load-introducing means are arranged such that the system natural frequency in the pivot direction coincides with the load introduction frequency in the pivot direction or, for introducing an additional load, deviates no more than 10%, from the system natural frequency in the pivot direction.

3. A method according to any one of the preceding claims, wherein the at least two active load-introducing means are controlled or regulated for adjusting and maintaining the ratio between the load introduction frequency of the first active load applying means (5B) and the load-introduction frequency of the second active load-introducing means (5A).

4. A method according to any one of the preceding claims, wherein the rotor blade (1) is clamped such that the longitudinal axis of the rotor blade (1) extends substantially horizontally and the pivot direction is oriented horizontally.

5. A method according to any one of the preceding claims, wherein the at least two active load-introducing means and/or at least one of the at least two passive load-introducing means are externally anchored.

6. A method according to any one of the preceding claims, wherein the ratio between the load introduction frequency of the first load-introducing means (5B) and the load introduction frequency of the second load-introducing means is 1:1, 2:1 or 1:2.

7. A method according to any one of the preceding claims, wherein a distribution of moment vector paths occurring in the field is determined, preferably by means of an aeroservoelastic multi-body simulation, and a setpoint middle bending moment is set by the passive load-introducing means, preferably by the decoupled masses (6) and/or by a bias of the elastic elements, such that a midpoint of moment vector paths generated by means of the active load-introducing means lies within the distribution of moment vector paths occurring in the field, wherein in particular the moment vector paths generated by the active load-introducing means are adapted to a contour of the distribution of the moment vector paths occurring in the field by adjusting the rotor blade (1) clockwise or counterclockwise about its longitudinal axis.

8. The method of claim 7, wherein the moment vector paths generated by the active load-introducing means are matched to a contour of the distribution of the moment vector paths occurring in the field by adjusting a phase angle between the load introduction in the pivot direction and the load introduction in the impact direction.

9. A method according to any one of the preceding claims, wherein the ratio between the load introduction frequencies is 1:1 and a phase angle between the load introduction in the pivot direction and the load introduction in the impact direction is between 0° and 180°, preferably between 45° and 135°, particularly preferably 90°.

10. A method of any one of claims 1 to 9, wherein the ratio between the load introduction frequencies is 1:2 or 2:1 and a phase angle between the load introduction in the pivot direction and the load introduction in the impact direction is 0° or 180°.

11. A method according to any one of the preceding claims, wherein a minimum distance between adjacent load frames is 1 m.

12. A testing device for testing a rotor blade (1) according to a method according to any one of the preceding claims, comprising
- the rotor blade (1),
- a clamping device (2) for clamping the rotor blade (1) at a clamping point (1') of the rotor blade (1), so that a longitudinal axis of the rotor blade (1) extends substantially horizontally starting from the clamping point (1'),
one or more load frames (4) to be attached to the rotor blade (1),
at least two active load-introducing means, each of which is attached to one of the load frames (4),
at least two passive load-introducing means which each attaches to one of the load frames (4),
wherein the two passive load-introducing means are configured such that they each only act in one direction,
wherein at least one of the at least two passive load-introducing means is configured for adjusting the system natural frequency in the impact direction and at least at least one of the at least two passive load-introducing means is configured for adjusting the system natural frequency in the pivot direction,
wherein
at least one of the at least two active load-introducing means is configured for introducing loads into the rotor blade (1) in a pivot direction, and at least one of the at least two active load-introducing means is configured for introducing loads into the rotor blade (1) in a impact direction,
and wherein at least one of the at least two passive load-introducing means is externally anchored and comprises an elastic element and/or a decoupled mass that is mounted on a rocker and is adapted to adjust a system natural frequency in the pivot direction or in the impact direction, for a system comprising the rotor blade and the at least two passive load-introducing means,
further comprising a control device adapted to control a load introduction frequency f_{Schwenk} of the first active load-introducing means and a load introduction frequency f_{schlag} of the second active load-introducing means such that a ratio between these two load introduction frequencies is rational, so that f_{schlag}:f_{schwenk}=n₁:n₂, wherein n₁ and n₂ are natural numbers and n₁ and n₂ are each not greater than 5,
wherein the load frames (4) and the at least two active load-introducing means and the at least two passive load-introducing means are arranged at previously determined positions which are selected in such a way that a bending moment distribution introduced during cyclic load introduction does not fall below the setpoint bending moment distribution and does not exceed it by more than 20%, preferably not by more than 15%, particularly preferably not by more than 10%.

13. A testing device according to claim 12, wherein the active load-introducing means is in the form of a hydraulic, or pneumatic or electric actuator and is preferably externally anchored.

14. A testing device according to any one of claims 12 or 13, wherein the elastic element is designed as a spring or torsion spring or beam or leaf spring and is preferably externally anchored.

15. A testing device, according to any one of claims 12 to 14, wherein the elastic element comprises a fibre composite, preferably comprising glass fibres and/or carbon fibres.

## Revendications

1. Procédé pour contrôler une pale de rotor (1) d'une installation éolienne, dans lequel une distribution de moment de flexion cible est définie, comprenant au moins les étapes consistant à :
- serrer la pale de rotor (1) dans un dispositif de serrage (2) de sorte qu'un axe longitudinal de la pale de rotor (1) s'étend depuis un point de serrage (1') de la pale de rotor,
- fixer un ou plusieurs cadres de charge (4) à la pale de rotor,
- fournir au moins deux moyens actifs d'application de charge, qui agissent chacun sur un des cadre de charge (4), dans lequel un premier (5B) des au moins deux moyens actifs d'application de charge est conçu pour une application de charge dans une direction de pivotement de la pale de rotor (1) et un second (5A) des au moins deux moyens actifs d'application de charge est conçu pour une application de charge dans une direction de battement de la pale de rotor (1),
- fournir au moins deux moyens passifs d'application de charge qui agissent chacun sur un des cadres de charge (4), dans lequel les deux moyens passifs d'application de charge sont conçus de manière à agir uniquement dans une direction,
dans lequel au moins un des au moins deux moyens passifs d'application de charge est fourni pour régler la fréquence propre du système dans la direction de battement et au moins un des au moins deux moyens passifs d'application de charge est fourni pour régler la fréquence propre du système dans la direction de pivotement,
dans lequel au moins un des au moins deux moyens passifs d'application de charge est réalisé sous la forme d'un élément élastique ou d'une masse découplée (6) qui est montée sur une bascule,
dans lequel, pour un système qui comprend la pale de rotor et les au moins deux moyens passifs d'application de charge, une fréquence propre du système pour la direction de pivotement et pour la direction de battement est modifiée par les au moins deux moyens passifs d'application de charge,
- appliquer une charge de manière cyclique par l'intermédiaire des au moins deux moyens actifs d'application de charge, dans lequel une fréquence d'application de charge f_{Schwenk} du premier moyen actif d'application de charge (5B) et une fréquence d'application de charge f_{schlag} du second moyen actif d'application de charge (5A) sont sélectionnées de manière à ce que leur rapport soit rationnel, de sorte que f_{schlag}:f_{schwenk}=n₁:n₂, dans lequel n₁ et n₂ sont des nombres naturels et n₁ et n₂ ne sont chacun pas supérieurs à 5, et dans lequel
les cadres de charge (4) et les au moins deux moyens actifs d'application de charge et les au moins deux moyens passifs d'application de charge sont agencés dans des positions prédéterminées, qui sont choisies de telle sorte qu'une distribution de moment de flexion appliquée lors d'une application de charge de manière cyclique ne soit pas inférieure à la distribution de moment de flexion cible et ne la dépasse pas de plus de 20 %, de préférence pas de plus de 15 %, et de préférence pas de plus de 10 %.

2. Procédé selon la revendication 1, dans lequel les au moins deux moyens passifs d'application de charge sont agencés de telle manière que la fréquence propre du système pour la direction de battement correspond à la fréquence d'application de charge dans la direction de battement ou, pour introduire une charge supplémentaire, ne s'écarte pas de plus de 10 % de la fréquence propre du système dans la direction de battement et/ou dans lequel les au moins deux moyens passifs d'application de charge sont agencés de telle sorte que la fréquence propre du système dans la direction de pivotement correspond à la fréquence d'application de charge dans la direction de pivotement ou, pour introduire une charge supplémentaire, ne s'écarte pas de plus de 10 % de la fréquence propre du système dans la direction de pivotement.

3. Procédé selon l'une quelconque des revendications précédentes, dans lequel les au moins deux moyens actifs d'application de charge sont commandés ou régulés pour établir et maintenir le rapport entre la fréquence d'application de charge du premier moyen actif d'application de charge (5B) et la fréquence d'application de charge du second moyen actif d'application de charge (5A).

4. Procédé selon l'une quelconque des revendications précédentes, dans lequel la pale de rotor (1) est serrée de telle sorte que l'axe longitudinal de la pale de rotor (1) s'étend essentiellement horizontalement et la direction de pivotement est orientée horizontalement.

5. Procédé selon l'une quelconque des revendications précédentes, dans lequel les au moins deux moyens actifs d'application de charge et/ou au moins l'un des au moins deux moyens passifs d'application de charge sont ancrés extérieurement.

6. Procédé selon l'une quelconque des revendications précédentes, dans lequel le rapport entre la fréquence d'application de charge du premier moyen d'application de charge (5B) et la fréquence d'application de charge du second moyen d'application de charge est de 1:1, 2:1 ou 1:2.

7. Procédé selon l'une quelconque des revendications précédentes, dans lequel une distribution de tracés vectoriels de moment survenant dans le champ est déterminée, de préférence au moyen d'une simulation multicorps aéro-servoélastique, et un moment de flexion moyen cible par les moyens passifs d'application de charge, de préférence par les masses découplées (6) et/ou par une précontrainte des éléments élastiques, est réglé de manière à ce qu'un point central des tracés vectoriels de moment générés au moyen des moyens actifs d'application de charge se situe à l'intérieur de la distribution des tracés vectoriels de moment se produisant dans le champ, dans lequel en particulier les trajets vectoriels de moment générés par les moyens actifs d'application de charge sont adaptés à un contour de la distribution des tracés vectoriels de moment survenant dans le champ, la pale de rotor (1) étant mise en marche dans le sens horaire ou antihoraire autour de son axe longitudinal.

8. Procédé selon la revendication 7, dans lequel les tracés vectoriels de moment générés par les moyens actifs d'application de charge sont adaptés à un contour de la distribution des tracés vectoriels de moment se produisant dans le champ en ajustant un angle de phase entre l'application de charge dans la direction de pivotement et l'application de charge dans la direction de battement.

9. Procédé selon l'une quelconque des revendications précédentes, dans lequel le rapport entre les fréquences d'application de charge est de 1:1 et un angle de phase entre une application de charge dans la direction de pivotement et une application de charge dans la direction de battement est compris entre 0° et 180°, de préférence entre 45° et 135°, de manière particulièrement préférée est de 90°.

10. Procédé selon l'une quelconque des revendications 1 à 9, dans lequel le rapport entre les fréquences d'application de charge est de 1:2 ou 2:1 et un angle de phase entre l'application de charge dans la direction de pivotement et l'application de charge dans la direction de battement est de 0° ou 180°.

11. Procédé selon l'une quelconque des revendications précédentes, dans lequel une distance minimum entre des cadres de charge adjacents est de 1 m.

12. Dispositif de contrôle pour contrôler une pale de rotor (1) selon un procédé selon l'une quelconque des revendications précédentes, comprenant
- la pale de rotor (1),
- un dispositif de serrage (2) pour serrer la pale de rotor (1) au niveau d'un point de serrage (1') de la pale de rotor (1), de sorte qu'un axe longitudinal de la pale de rotor (1) s'étend sensiblement horizontalement à partir du point de serrage (1'),
un ou plusieurs cadres de charge (4) destinés à être fixés à la pale de rotor (1),
au moins deux moyens actifs d'application de charge fixés chacun à l'un des cadres de charge (4),
au moins deux moyens passifs d'application de charge, qui sont fixés chacun à l'un des cadres de charge (4),
dans lequel les deux moyens passifs d'application de charge sont conçus de telle sorte qu'ils n'agissent que dans une direction,
dans lequel au moins un des au moins deux moyens passifs d'application de charge est configuré pour régler la fréquence propre du système dans la direction de battement et au moins un des au moins deux moyens passifs d'application de charge est configuré pour régler la fréquence propre du système dans la direction de pivotement,
dans lequel
au moins un des au moins deux moyens actifs d'application de charge est configuré pour une application de charge dans une direction de pivotement dans la pale de rotor (1) et au moins un des au moins deux moyens actifs d'application de charge est configuré pour une application de charge dans une direction de battement dans la pale de rotor (1),
et dans lequel au moins un des au moins deux moyens passifs d'application de charge est ancré extérieurement et comprend un élément élastique et/ou une masse découplée qui est montée sur une bascule et est configuré pour ajuster une fréquence propre du système dans la direction de pivotement ou dans la direction de battement pour un système qui comprend la pale de rotor et les au moins deux moyens passifs d'application de charge,
contenant en outre un dispositif de réglage qui est configuré pour régler une fréquence d'application de charge f_{Schwenk} du premier moyen actif d'application de charge et une fréquence d'application de charge f_{schlag} du second moyen actif d'application de charge, de sorte qu'un rapport entre ces deux fréquences d'application de charge soit rationnel, tel que f_{schlag}:f_{schwenk}=n₁:n₂, dans lequel n₁ et n₂ sont des nombres naturels et n₁ et n₂ ne sont chacun pas supérieurs à 5,
dans lequel les cadres de charge (4) et les au moins deux moyens actifs d'application de charge et les au moins deux moyens passifs d'application de charge sont agencés dans des positions prédéterminées, qui sont choisies de telle sorte qu'une distribution de moment de flexion appliquée lors d'une application de charge de manière cyclique ne soit pas inférieure à la distribution de moment de flexion cible et ne la dépasse pas de plus de 20 %, de préférence pas de plus de 15 %, et de préférence pas de plus de 10 %.

13. Dispositif de contrôle selon la revendication 12, dans lequel les moyens actifs d'application de charge sont réalisés sous la forme d'actionneurs hydrauliques, pneumatiques ou électriques et sont de préférence ancrés extérieurement.

14. Dispositif de contrôle selon l'une quelconque des revendications 12 ou 13, dans lequel l'élément élastique est réalisé sous la forme d'un ressort ou d'un ressort de torsion ou d'un ressort à barre ou à lame et est de préférence ancré extérieurement.

15. Dispositif de contrôle selon l'une quelconque des revendications 12 à 14, dans lequel l'élément élastique comprend un matériau composite fibreux, de préférence avec des fibres de verre et/ou des fibres de carbone.
